(19) Europäisches Patentamt
European Patent Office
Office européen des brevets

(11) EP 1 679 345 A1

(12) EUROPEAN PATENT APPLICATION
published in accordance with Art. 158(3) EPC

(43) Date of publication:
**12.07.2006 Bulletin 2006/28**

(21) Application number: **04773451.2**

(22) Date of filing: **21.09.2004**

(51) Int Cl.:
***C08L 33/00*** (1985.01) ***C08F 20/18*** (1974.07)
***C09K 3/10*** (1968.09) ***F16J 15/10*** (1968.09)
***F16J 15/14*** (1968.09)

(86) International application number:
**PCT/JP2004/014139**

(87) International publication number:
**WO 2005/030866 (07.04.2005 Gazette 2005/14)**

(84) Designated Contracting States:
**AT BE BG CH CY CZ DE DK EE ES FI FR GB GR HU IE IT LI LU MC NL PL PT RO SE SI SK TR**

(30) Priority: **29.09.2003 JP 2003338094**
**29.09.2003 JP 2003338093**

(71) Applicant: **KANEKA CORPORATION**
**Osaka-shi, Osaka 530-8288 (JP)**

(72) Inventors:
- **OKADA, Kenji**
**Kobe-shi,**
**Hyogo 6570036 (JP)**
- **NAKAGAWA, Yoshiki**
**Settsu-shi,**
**Settsu-shi,**
**Osaka 5660072 (JP)**

(74) Representative: **Hart Davis, Jason et al**
**Cabinet Beau de Loménie,**
**158, rue de l'Université**
**75340 Paris Cedex 07 (FR)**

(54) **COMPOSITION FOR ON-SITE FORMING GASKET, GASKET, (METH)ACRYLIC POLYMER AND CURING COMPOSITION THEREOF**

(57) The present invention provides a composition for on-site forming gaskets, which has excellent heat resistance, weather resistance, oil resistance, curability, compression set, and the like, a gasket, and (meth)acrylic acid and a curable composition thereof. Specifically, the present invention provides a composition for on-site forming gaskets containing a vinyl polymer with a (meth) acryloyl group at a molecular end as an essential component, and a gasket, a cured product of the composition exhibiting predetermined compression set. Also, the present invention provides a (meth)acrylic polymer having a (meth)acryloyl group at a molecular end and a curable composition thereof, a cured product exhibiting high oil resistance.

EP 1 679 345 A1

**Description**

TECHNICAL FIELD

The present invention relates to a composition for on-site forming gaskets, a gasket, and a (meth) acrylic polymer and a curable composition thereof. More specifically, the present invention relates to a composition for on-site forming gaskets, containing a vinyl polymer having a (meth)acryloyl group at an end of its molecule as a necessary component, and a gasket. Also, the present invention relates to a (meth) acrylic polymer having at least one (meth) acryloyl group at a molecular end and produced by atom transfer radical polymerization, and a curable composition thereof.

BACKGROUND ART

Acrylic rubber is used for functional parts, safety related parts, and the like which are mainly disposed around automobile engines in view of its characteristics such as heat resistance, oil resistance, etc., and a gasket is one of main products thereof. A gasket is produced by kneading unvulcanized rubber with compounding agents such as a filler, a vulcanizing agent, and the like, and then vulcanizing and molding the kneaded mixture. However, the acrylic rubber is disadvantageous in that it adheres to a roll during kneading or exhibits difficulty in flattening during sheeting, low processability due to non-flowability in molding and a low rate of vulcanization, or low curability due to the need for post curing for a long time or the like. There are also many problems of seal reliabylity, the need for precise processing of a flange surface, and the like. Acrylic rubber with improved processability and curability has been reported (Japanese Kokai Publication 2000-154370), but an expected curing rate may be lower than that of a photocuring system. In this case, significant improvement in productivity cannot be attained.

Although silicone materials and materials mainly composed of urethane acrylate are used as materials for gaskets, silicone materials are greatly damaged by recent high-performance engine oils, such as SJ-grade engine oil, and automatic-only transmission oil and gear oil in some cases. This problem cannot be resolved by a conventional technique, such as a method of adding iminoxysilane and basic zinc carbonate containing 5 to 50% by weight of zinc hydroxide (Japanese Kokai Publication Hei-03-203960) . On the other hand, materials mainly composed of urethane (meth)acrylate resin exhibit excellent oil resistance (Japanese Kokai Publication Sho-64-112 and Japanese Kokoku Publication Hei-03-32593), but have the problem of long-term heat resistance because the main chains thereof have ether bonds or ester bonds. The inventors of the present invention have previously reported a polymer including an acrylic polymer produced by living radical polymerization as a main chain and terminated with a (meth)acryloyl group (Japanese Kokai Publication 2000-72816 and Japanese Kokai Publication 2000-95826). However, compression set and oil resistance, which are necessary physical properties for gaskets, have been not descried.

It is also known that a polymer terminated with a (meth)acryloyl group can perform photopolymerization or thermal radical polymerization, and such a polymer having two or more (meth) acryloyl groups in its molecule can produce cured products.

Examples of the main chain skeleton of such a polymer having a (meth)acryloyl group at a molecular end include polyether polymers, such as polyethylene oxide, polypropylene oxide, and polytetramethylene oxide; hydrocarbon polymers, such as polybutadiene and polyisoprene; and polyester polymers such as polyethylene terephthalate and polybutylene terephthalate. These polymers can be used for various applications on the basis of the main chain skeletons and cross-linking.

Apart from the above-listed polymers produced by ionic polymerization or condensation polymerization, vinyl polymers terminated with a (meth) acryloyl group and produced by radical polymerization have been little put into practical application. Among these vinyl polymers, (meth)acrylic polymers have characteristics such as high heat resistance, weather resistance, and transparency, which cannot be obtained by the polyether polymers, hydrocarbon polymers, or polyester polymers.

If a (meth) acrylic polymer having a (meth) acryloyl group at its molecular end can be produced by a simple method, a cured product having excellent physical properties such as elasticity can be obtained, as compared with a polymer having a (meth) acryloyl group in its side chain. Therefore, methods for producing such a polymer having a (meth) acryloyl group at its molecular end have been studied by many researchers so far, but industrial production thereof is difficult.

Known examples of a compound having a (meth)acryloyl group at its molecular end and having heat resistance and weather resistance include compounds having bisphenol A in the main chains thereof (Japanese Patent Publication No. 2683883) . However, cured products having flexibility or the like cannot be obtained because of the low molecular weight between crosslinks.

Examples of a compound having a (meth)acryloyl group at a molecular end include urethane acrylate (International Publication WO02-68482). However, such a compound has excellent oil resistance but has the problem of long-term heat resistance.

Furthermore, (meth)acrylic polymers subjected to moisture curing have been reported (International Publication WO02-68482). However, since the curing system is different, such polymers are difficult to be applied to a field in which a fast-curing property is required. The inventors of the present invention have previously reported (meth)acryloyl group-terminated polymers having acrylic polymers produced by living radical polymerization as main chains (Japanese Kokai Publication 2000-72816 and Japanese Kokai Publication 2000-95826), but main chains improved in oil resistance have been not described.

SUMMARY OF THE INVENTION

The present invention provides a composition for on-site forming gaskets having excellent heat resistance, weather resistance, oil resistance, curability, compression set, and the like, a gasket, and a (meth)acrylic polymer having a (meth)acryloyl group in its end and a curable composition thereof.

The present invention provides a novel composition for on-site forming gaskets and a gasket having the following constitution:

1) The composition contains 10 to 100% by weight of a vinyl polymer [polymer (I)] having at least one group represented by formula 1 per molecule at its molecular end:

$$-OC(O)C(R^a)=CH_2 \qquad (1)$$

(wherein $R^a$ represents hydrogen or an organic group having 1 to 20 carbon atoms), and a cured product prepared by curing the composition has a compression set of 40% or less according to the definition of JIS K 6262.

2) The composition contains 10 to 100% by weight of polymer (I) and is used for sealing a portion required to have oil resistance.

3) The composition contains 10 to 100% by weight of polymer (I) and is used for sealing a portion required to have oil resistance and heat resistance.

4) The composition contains 10 to 100% by weight of polymer (I) and is used in the periphery of an automobile engine.

5) The composition contains 10 to 100% by weight of polymer (I), and a cured product prepared by curing the composition exhibits higher oil resistance than that of a cured product from a composition containing a polymer which is prepared by substituting the repeat unit of the main chain of polymer (I) with butyl acrylate alone, in any one item of the immersion test according to JIS K 6258 for the land use 3-5 lubricating oil specified in JIS K 2215.

6) The composition contains a (meth)acrylic polymer as polymer (I).

7) The composition contains an acrylate polymer as polymer (I).

8) The composition contains polymer (I) composed of ethyl acrylate and/or 2-methoxyethyl acrylate and/or 2-ethoxyethyl acrylate as an essential constitutional unit.

9) The composition contains polymer (I) which is produced by the step of:

reacting a halogen group-terminated vinyl polymer with a compound represented by formula 2:

$$M^{+-}OC(O)C(R^a)=CH_2 \qquad (2)$$

(wherein $R^a$ represents hydrogen or an organic group having 1 to 20 carbon atoms, and $M^+$ represents an alkali metal ion or a quaternary ammonium ion).

10) The composition contains polymer (I) whose main chain is produced by living radical polymerization of a vinyl monomer.

11) The composition contains polymer (I) whose main chain is produced by polymerization of a vinyl monomer using a chain transfer agent.

12) The composition contains polymer (I) having a number-average molecular weight of 3,000 or more.

13) The composition contains polymer (I) having a ratio of the weight-average molecular weight to the number-average molecular weight according to measurement by gel permeation chromatography of less than 1.8.

14) The composition may contain a monomer and/or oligomer having a radical polymerizable group.

15) The composition may contain a monomer and/or oligomer having a (meth)acryloyl group.

16) The composition may further contain a photopolymerization initiator or a thermopolymerization initiator.

17) The gasket formed on-site includes the composition for on-site forming a gasket.

18) The curing method may be by active energy ray irradiation or heat.

The present invention also relates to a (meth)acrylic polymer having excellent oil resistance and the following constitution:

1) The (meth) acrylic polymer is produced by atom transfer radical polymerization and has at least one group represented by formula 1 at its molecular end:

$$-OC(O)C(R^a)=CH_2 \qquad (1)$$

(wherein $R^a$ represents hydrogen or an organic group having 1 to 20 carbon atoms), and a cured product thereof exhibits higher oil resistance than that of a cured product from a butyl acrylate homopolymer having the same structure in any one item of the immersion test according to JIS K 6258 for the land use 3-5 lubricating oil specified in JIS K 2215.

The present invention further relates to a curable composition containing the (meth)acrylic polymer and a photopolymerization initiator or a thermopolymerization initiator.

The present invention further relates to a curable composition containing a (meth)acrylic polymer which is produced by atom transfer radical polymerization and which has at least one group represented by formula (1) at its molecular end:

$$-OC(O)C(R^a)=CH_2 \qquad (1)$$

(wherein $R^a$ represents hydrogen or an organic group having 1 to 20 carbon atoms) and ethyl acrylate and/or an alkoxyalkyl acrylate as an essential constitutional unit. Because of higher oil resistance, the (meth)acrylic polymer contained in the curable composition of the invention preferably contains 2-methoxyethyl acrylate and/or 2-ethoxyethyl acrylate as the alkoxyalkyl acrylate which is contained as the constitutional unit. The curable composition of the present invention can be suitably applied to on-site forming of gaskets because of high oil resistance.

The present invention can provide a composition for on-site forming gaskets, which produces a cured product with low compression set. The composition for on-site forming gaskets of the present invention can produce gaskets formed on site with excellent heat resistance, weather resistance, oil resistance, curability, or the like.

Also, the present invention can provide a (meth) acryloyl group-terminated (meth)acrylic polymer having excellent oil resistance while maintaining physical properties such as high heat resistance and flexibility, and a curable composition thereof.

## DETAILED DESCRIPTION OF THE INVENTION

A composition for on-site forming gaskets of the present invention includes 10 to 100% by weight of a vinyl polymer [polymer (I)] having at least one group represented by formula 1 at its molecular end:

$$-OC(O)C(R^a)=CH_2 \qquad (1)$$

(wherein $R^a$ represents hydrogen or an organic group having 1 to 20 carbon atoms).

Also, a composition for on-site forming gaskets of the present invention includes 10 to 100% by weight of a vinyl polymer [polymer (I)] having at least one group represented by formula 1 at its molecular end:

$$-OC(O)C(R^a)=CH_2 \qquad (1)$$

(wherein $R^a$ represents hydrogen or an organic group having 1 to 20 carbon atoms), and a cured product prepared by curing the composition has a compression set of 40% or less according to the definition of JIS K 6262. The compression set is measured by a method in which the cured product is compressed at a predetermined rate by a compression apparatus using a spacer and maintained in the compression state at 150°C for 70 hours, and then the cured product is removed from the compression apparatus, released from the compression state, and then allowed to stand at 23°C for 30 minutes, followed by measurement of the thickness. The compression set refers to a value calculated by substituting the measured value into the following equation:

$$Cs\ (\%) = 100 \times [(t0 - t2)/(t0 - t1)]$$

In the equation, Cs represents compression set (%), t0 represents the initial (before compression) thickness (mm) of the cured product, t1 represents the thickness (mm) of the spacer, and t2 represents the thickness (mm) of the cured product 30 minutes after removal from the compression apparatus.

Polymer (I) is preferably an acrylate polymer and further preferably includes at least one of butyl acrylate, ethyl acrylate, 2-methoxyethyl acrylate, and 2-ethoxyethyl acrylate as an essential constitutional unit of polymer (I). The main chain of polymer (I) is preferably produced by living radical polymerization, and the living radical polymerization is more preferably atom transfer radical polymerization. From the viewpoint of improvement in strength of the cured product, it is effective to add reinforcing silica or the like. The composition for on-site forming gaskets of the present invention is preferably cured by active energy rays, such as UV, electron beams, or the like, or heat, but the curing method is not particularly limited. In order to obtain high curability and low compression set, curing is particularly preferably performed by active energy rays, such as UV, electron beams, or the like.

The composition for on-site forming gaskets of the present invention will be described below.

<Polymer (I)>

The number of (meth)acryloyl groups is not particularly limited, but the number is preferably 1 or more and more preferably 1.2 to 4 per molecule from the viewpoint of cross-linking of polymer (I) because curability degrades when the number is less than 1.

The (meth)acryloyl group may be present at either of a side chain and an end of the molecule, but the group is preferably present in its molecular end from the viewpoint of rubber elasticity.

In the (meth) acryloyl group, $R^a$ represents a hydrogen atom or an organic group having 1 to 20 carbon atoms and preferably a hydrogen atom or a hydrocarbon group having 1 to 20 carbon atoms. Examples of the hydrocarbon group having 1 to 20 carbon atoms include an alkyl group having 1 to 20 carbon atoms, an aryl group having 6 to 20 carbon atoms, an aralkyl group having 7 to 20 carbon atoms, and a nitrile group. These groups may be substituted with a hydroxyl group or the like. Examples of an alkyl group having 1 to 20 carbon atoms include methyl, ethyl, propyl, butyl, pentyl, hexyl, octyl, and decyl. Examples of an aryl group having 6 to 20 carbon atoms include phenyl and naphthyl. Examples of an aralkyl group having 7 to 20 carbon atoms include benzyl and phenylethyl.

Examples of $R^a$ include, but not limited to, -H, $-CH_3$, $-CH_2CH_3$, $-(CH_2)_nCH_3$ (n represents an integer of 2 to 19), $-C_6H_5$, $-CH_2OH$, and -CN. Among these groups, -H and $-CH_3$ are preferred.

As a vinyl monomer which constitutes the main chain of polymer (I) is not particularly limited, and any of various monomers can be used. Examples of the vinyl monomer include (meth) acrylic acidmonomers, such as (meth) acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth) acrylate, n-heptyl (meth)acrylate, n-octyl (meth)acrylate, 2-ethylhexyl (meth)acrylate, nonyl (meth)acrylate, decyl (meth) acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate; styrene monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide monomers, such as, maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile-containing vinyl monomers, such as acrylonitrile and methacrylonitrile; amido-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, and allyl alcohol. These compounds may be used alone, or at least two may be copolymerized. In particular, from the viewpoint of physical properties of a product, styrene monomers and (meth)acrylic monomers are preferred. Acrylate monomers and methacrylate monomers are more preferred, and a (co) polymer containing any of butyl acrylate, ethyl acrylate, 2-methoxyethyl acrylate, and 2-ethoxyethyl acrylate is further preferred. From the viewpoint of oil resistance and low-temperature characteristics, a copolymer of ethyl acrylate, 2-methoxyethyl acrylate, and butyl acrylate is most preferred. In view of physical properties such as oil resistance and low-temperature characteristics, the ratio of these monomers can be changed. In the present invention, these preferred monomers may be copolymerized, e.g., block-copolymerized, with another monomer. In this case, the content by weight

of the preferred monomers is preferably 40% by weight or more. In the above expression, the term "(meth)acrylic acid" means acrylic acid and/or methacrylic acid.

The molecular weight distribution [ratio of the weight-average molecular weight (Mw) to the number-average molecular weight (Mn) determined by gel permeation chromatography] of polymer (I) is not particularly limited, but the ratio is preferably less than 1.8, further preferably 1.7 or less, more preferably 1.6 or less, particularly preferably 1.5 or less, specifically preferably 1.4 or less, and most preferably 1.3 or less. In GPC measurement in the present invention, a molecular weight is generally determined in terms of polystyrene using a polystyrene gel column or the like and chloroform or tetrahydrofuran as a mobile phase.

The number-average molecular weight of polymer (I) is preferably in a range of 500 to 100,000 and more preferably 3,000 to 40,000. When the molecular weight is 500 or less, the inherent characteristics of the vinyl polymer are not easily exhibited, while when the molecular weight is 100,000 or more, handling becomes difficult.

<Process for producing polymer (I)>

The process for producing polymer (I) is not particularly limited. A vinyl polymer is generally produced by anionic polymerization or radical polymerization, but radical polymerization is preferred in view of versatility of a monomer or easy control. As the radical polymerization, living radical polymerization or radical polymerization using a chain transfer agent is preferred, and the former is particularly preferred.

Radical polymerization processes used for synthesizing polymer (I) are classified into a general radical polymerization process in which a monomer having a specified functional group and a vinyl monomer are simply copolymerized using an azo compound, a peroxide, or the like as a polymerization initiator, and a controlled radial polymerization process in which a specified functional group can be introduced at a controlled position such as an end or the like.

The general radical polymerization process is a simple process, and a monomer having a specified functional group can be introduced into a polymer only stochastically. When a polymer with high functionality is desired, therefore, a considerable amount of a monomer must be used. Conversely, use of a small amount of a monomer has the problem of increasing the ratio of a polymer in which the specified functional group is not introduced. There is also the problem of producing only a polymer with a wide molecular weight distribution and high viscosity due to free radical polymerization.

The controlled radical polymerization process is further classified into a chain transfer agent process in which polymerization is performed using a chain transfer agent having a specified functional group to produce a vinyl polymer having the functional group at an end, and a living radical polymerization process in which polymerization propagation termini propagate without causing termination reaction to produce a polymer having a molecular weight substantially equal to the design.

The chain transfer agent process is capable of producing a polymer with high functionality, but a considerable amount of a chain transfer agent having a specified functional group must be used relative to the initiator, thereby causing an economical problem of the cost including the treatment cost. Like the general radical polymerization process, the chain transfer agent process also has the problem of producing only a polymer with a wide molecular weight distribution and high viscosity because it is free radical polymerization.

It is true that the living radical polymer process belongs to a radical polymerization process which has a high polymerization rate and is difficult to control because termination reaction easily occurs due to radical coupling or the like. However, unlike in the above-mentioned processes, in the living radical polymerization process, termination reaction little occurs, a polymer having a narrow molecular weight distribution (Mw/Mn of about 1.1 to 1.5) can be produced, and the molecular weight can be freely controlled by changing the charge ratio of the monomer to the initiator.

Therefore, the living radical polymerization process is capable of producing a polymer with a narrow molecular weight distribution and low viscosity and introducing a monomer having a specified functional group into a substantially desired position. Thus, this process is more preferred as a process for producing the vinyl polymer having the specified functional group.

In a narrow sense, "living polymerization" means polymerization in which molecular chains propagate while maintaining activity at the termini. However, the living polymerization generally includes pseudo-living polymerization in which molecular chains propagate in equilibrium between deactivated and activated termini. The definition in the present invention includes the latter.

In recent, the living radical polymerization has been actively studied by various groups. Examples of studies include a process using a cobalt porphyrin complex, as shown in Journal of American Chemical Society (J. Am. Chem. Soc.), 1994, vol. 116, p. 7943; a process using a radical scavenger such as a nitroxide compound, as shown in Macromolecules, 1994, vol. 27, p. 7228; and an atom transfer radical polymerization (ATRP) process using an organic halide or the like as an initiator and a transition metal complex as a catalyst.

Among these living radical polymerization processes, the atom transfer radical polymerization process in which a vinyl monomer is polymerized using an organic halide or a halogenated sulfonyl compound as an initiator and a transition metal complex as a catalyst has the above-mentioned characteristics of the living radical polymerization and

also has the characteristic that a terminus has a halogen or the like, which is relatively useful for functional group conversion reaction, and the initiator and catalyst have high degrees of design freedom. Therefore, the atom transfer radical polymerization process is more preferred as a process for producing a vinyl polymer having a specified functional group. Examples of the atom transfer radical polymerization process include the processes disclosed in Matyjaszewski, et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/30421 and WO97/18247; andSawamoto, et al., Macromolecules, 1995, vol. 28, p. 1721.

In the present invention, any one of these processes may be used without limitation, but the controlled radical polymerization is basically used, and the living radical polymerization is more preferred from the viewpoint of easy control. The atom transfer radical polymerization process is particularly preferred.

First, the controlled radical polymerization process using a chain transfer agent will be described. The radical polymerization process using the chain transfer agent (telomer) is not particularly limited, but examples of a process for producing a vinyl polymer having a terminal structure suitable for the present invention include the following two processes:

A process for producing a halogen-terminated polymer using a halogenated hydrocarbon as the chain transfer agent as disclosed in Japanese Kokai Publication Hei-04-132706, and a method for producing a hydroxyl group-terminated polymer using a hydroxyl group-containing mercaptane or a hydroxyl group-containing polysulfide or the like as the chain transfer agent as disclosed in Japanese Kokai Publication Sho-61-271306, Japanese Patent Publication No. 2594402, and Japanese Kokai Publication Sho-54-47782.

Next, the living radical polymerization will be described.

First, the process using a nitroxide compound as the radical scavenger will be described. This polymerization process generally uses stable nitroxy free radical (=N-O·) as a radical capping agent. Preferred examples of such a compound include, but not limited to, nitroxy free radicals produced from cyclic hydroxyamines, such as 2,2,6,6-substituted-1-piperidinyloxy radical and 2,2,5,5-substituted-1-pyrrolidinyloxy radical. As a substituent, an alkyl group having 4 or less carbon atoms, such as methyl or ethyl, is suitable. Specific examples of a nitroxy free radical compound include, but not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-tert-butylaminoxy radical. Instead of the nitroxy free radical, stable free radical such as galvinoxyl free radical may be used.

The radical capping agent is used in combination with the radical generator. The reaction product of the radical capping agent and the radical generator possibly servers as a polymerization initiator to promote polymerization of an addition-polymerizable monomer. The ratio between both agents used is not particularly limited, but the amount of the radical initiator is preferably 0.1 to 10 moles per mole of the radical capping agent.

As a radical generator, any one of various compounds can be used, but a peroxide capable of generating radical under a polymerization temperature is preferred. Examples of the peroxide include, but not limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl) peroxydicarbonate; and alkyl peresters, such as tert-butyl peroxyoctoate and tert-butyl peroxybenzoate. In particular, benzoyl peroxide is preferred. Instead of the peroxide, a radical generator such as a radical generating azo compound, e.g., azobisisobutyronitrile, maybe used.

As reported in Macromolecules, 1995, 28, 2993, the alkoxyamine compound shown below may be used as the initiator instead of a combination of the radical capping agent and the radical generator.

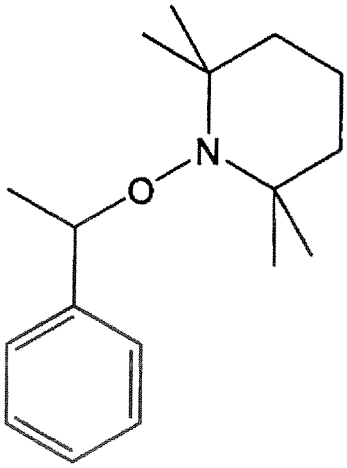 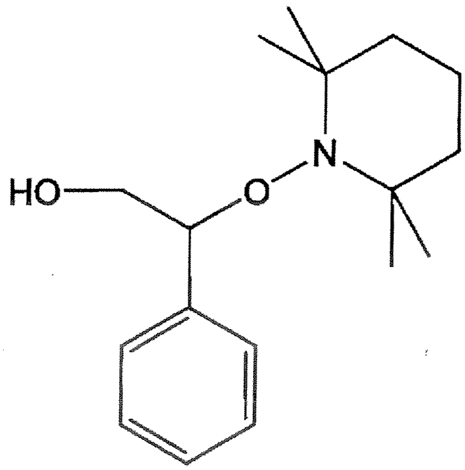

or, the use of a compound having a functional group such as a hydroxyl group as shown in the above figure produces a polymer having the functional group at an end. When this compound is used in the method of the present invention, a polymer having the functional group at an end is produced.

The conditions of polymerization using the nitroxide compound as the radical scavenger, such as the monomer, the solvent, the polymerization temperature, and the like, are not limited. However, these conditions may be the same as those in atom transfer radical polymerization which will be described below.

Next, the atom transfer radical polymerization suitable as the living radical polymerization of the present invention will be described.

The atom transfer radical polymerization uses, as the initiator, an organic halide, particularly an organic halide having a highly reactive carbon-halogen bond (e.g., a carbonyl compound having a halogen at an $\alpha$-position, or a compound having a halogen at a benzyl position), or a halogenated sulfonyl compound.

Specific examples of such a compound include the following:

$C_6H_5$-$CH_2X$, $C_6H_5C(H)(X)CH_3$, and $C_6H_5$-$C(X)(CH_3)_2$

(wherein $C_6H_5$ is a phenyl group, X is chlorine, bromine, or iodine);

$R^3$-C(H)(X)-$CO_2R^4$, $R^3$-C($CH_3$)(X)-$CO_2R^4$, $R^3$-C(H)(X)-C(O)$R^4$, and $R^3$-C($CH_3$)(X)-C(O)$R^4$

(wherein $R^3$ and $R^4$ are each a hydrogen atom or an alkyl group having 1 to 20 carbon atoms, an aryl group having 6 to 20 carbon atoms, or an aralkyl group having 7 to 20 carbon atoms; X is chlorine, bromine, or iodine); and

$R^3$-$C_6H_4$-$SO_2X$

(wherein $R^3$ is a hydrogen atom or an alkyl group having 1 to 20 carbon atoms, an aryl group having 6 to 20 carbon atoms, or an aralkyl group having 7 to 20 carbon atoms; X is chlorine, bromine, or iodine).

As the initiator of the atom transfer radical polymerization, an organic halide or halogenated sulfonyl compound having a functional group other than a functional group which initiates polymerization can be used. In this case, the resultant vinyl polymer has the functional group at one of the main chain ends and a structure represented by formula 2 at the other end. Examples of such a functional group include alkenyl, crosslinkable silyl, hydroxyl, epoxy, amino, and amido.

Examples of an organic halide having an alkenyl group include, but not limited to, compounds having the structure represented by formula 6:

$$R^6R^7C(X)\text{-}R^8\text{-}R^9\text{-}C(R^5)=CH_2 \qquad (6)$$

(wherein $R^5$ is a hydrogen atom or a methyl group; $R^6$ and $R^7$ are each a hydrogen atom, an alkyl group having 1 to 20 carbon atoms, an aryl group having 6 to 20 carbon atoms, or an aralkyl group having 7 to 20 carbon atoms, or $R^6$ and $R^7$ are bonded together at the other ends; $R^8$ is -C(O)O- (ester group), -C(O)- (keto group), or an o-, m-, or p-phenylene group; $R^9$ is a direct bond or a divalent organic group having 1 to 20 carbon atoms, which may contain at least one ether

bond; and X is chlorine, bromine, or iodine).

Specific examples of substituents $R^6$ and $R^7$ include hydrogen, methyl, ethyl, n-propyl, isopropyl, butyl, pentyl, and hexyl. Substituents $R^6$ and $R^7$ may be bonded together at the other ends to form a cyclic skeleton.

Examples of divalent organic group $R^9$ having 1 to 20 carbon atoms, which may contain at least one ether bond, include alkylene having 1 to 20 carbon atoms, which may contain at least one ether bond.

Specific examples of an alkenyl group-containing organic halide represented by formula 6 include the following:

$XCH_2C(O)O(CH_2)_nCH=CH_2$,
$H_3CC(H)(X)C(O)O(CH_2)_nCH=CH_2$,
$(H_3C)_2C(X)C(O)O(CH_2)_nCH=CH_2$,
$CH_3CH_2C(H)(X)C(O)O(CH_2)_nCH=CH_2$, and

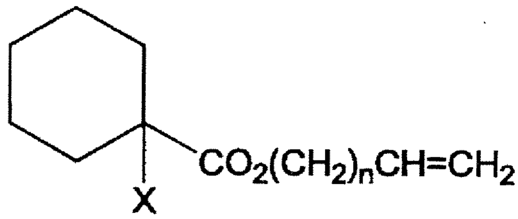

(wherein X is chlorine, bromine, or iodine, and n is an integer of 0 to 20);

$XCH_2C(O)O(CH_2)_nO(CH_2)_mCH=CH_2$,
$H_3CC(H)(X)C(O)O(CH_2)_nO(CH_2)_mCH=CH_2$,
$(H_3C)_2C(X)C(O)O(CH_2)_nO(CH_2)_mCH=CH_2$,
$CH_3CH_2C(H)(X)C(O)O(CH_2)_nO(CH_2)_mCH=CH_2$, and

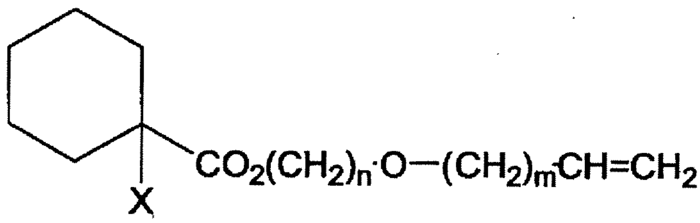

(wherein X is chlorine, bromine, or iodine, n is an integer of 1 to 20, and m is an integer of 0 to 20);

o, m, p-$XCH_2$-$C_6H_4$-$(CH_2)_n$-$CH=CH_2$,
o, m, p-$CH_3C(H)(X)$-$C_6H_4$-$(CH_2)_n$-$CH=CH_2$, and
o, m, p-$CH_3CH_2C(H)(X)$-$C_6H_4$-$(CH_2)_n$-$CH=CH_2$

(wherein X is chlorine, bromine, or iodine, and n is an integer of 0 to 20);

o, m, p-$XCH_2$-$C_6H_4$-$(CH_2)_n$-O-$(CH_2)_m$-$CH=CH_2$,
o, m, p-$CH_3C(H)(X)$-$C_6H_4$-$(CH_2)_n$-O-$(CH_2)_m$-$CH=CH_2$, and
o, m, p-$CH_3CH_2C(H)(X)$-$C_6H_4$-$(CH_2)_n$-O-$(CH_2)_mCH=CH_2$

(wherein X is chlorine, bromine, or iodine, n is an integer of 1 to 20, and m is an integer of 0 to 20);

o, m, p-$XCH_2$-$C_6H_4$-O-$(CH_2)_n$-$CH=CH_2$,
o, m, p-$CH_3C(H)(X)$-$C_6H_4$-O-$(CH_2)_n$-$CH=CH_2$, and
o, m, p-$CH_3CH_2C(H)(X)$-$C_6H_4$-O-$(CH_2)_n$-$CH=CH_2$

(wherein X is chlorine, bromine, or iodine, and n is an integer of 0 to 20); and

o, m, p-$XCH_2$-$C_6H_4$-O-$(CH_2)_n$-O-$(CH_2)_m$-CH=$CH_2$,
o, m, p-$CH_3C(H)$ (X)-$C_6H_4$-O-$(CH_2)_n$-O-$(CH_2)_m$-CH=$CH_2$, and
o, m, p-$CH_3CH_2C(H)$ (X)-$C_6H_4$-O-$(CH_2)_n$-O-$(CH_2)_m$-CH=$CH_2$

(wherein X is chlorine, bromine, or iodine, n is an integer of 1 to 20, and m is an integer of 0 to 20).

Other examples of an organic halide having an alkenyl group include compounds represented by formula 7:

$$H_2C=C(R^5)\text{-}R^9\text{-}C(R^6)(X)\text{ -}R^{10}\text{-}R^7 \qquad (7)$$

(wherein $R^5$, $R^6$, $R^7$, $R^9$, and X represent the same as the above, and $R^{10}$ represents a direct bond or -C(O)O- (ester group), -C(O)-(keto group), or an o-, m-, or p-phenylene group).

$R^9$ is a direct bond or a divalent organic group having 1 to 20 carbon atoms (which may contain at least one ether bond) . When $R^9$ is a direct bond, the compound is a halogenated allyl compound in which a vinyl group is bonded to the carbon bonded to a halogen. In this case, the carbon-halogen bond is activated by the adjacent vinyl group, and thus a C(O)O or phenylene group is not necessarily required as $R^{10}$, and a direct bond may be present. When $R^9$ is not a direct bond, $R^{10}$ is preferably a C(O)O, C(O), or phenylene group for activating the carbon-halogen bond.

Specific examples of the compounds represented by formula 7 include the following:

$CH_2$=$CHCH_2X$, $CH_2$=$C(CH_3)CH_2X$, $CH_2$=CHC(H)(X)$CH_3$,
$CH_2$=$C(CH_3)C(H)(X)CH_3$, $CH_2$=CHC(X)$(CH_3)_2$, $CH_2$=CHC(H)(X)$C_2H_5$,
$CH_2$=CHC(H)(X)CH$(CH_3)_2$, $CH_2$=CHC(H)(X)$C_6H_5$, $CH_2$=CHC(H)(X)$CH_2C_6H_5$,
$CH_2$=$CHCH_2C(H)(X)$-$CO_2R$, $CH_2$=CH$(CH_2)_2$C(H)(X)-$CO_2R$,
$CH_2$=CH$(CH_2)_3$C(H)(X)-$CO_2R$, $(CH_2)$=CH$(CH_2)_8$C(H)(X)-$CO_2R$,
$CH_2$=$CHCH_2C(H)(X)$ -$C_6H_5$, $CH_2$=CH$(CH_2)_2$C(H) (X)-$C_6H_5$, and
$CH_2$=CH$(CH_2)_3$C(H)(X)-$C_6H_5$

(wherein X is chlorine, bromine, or iodine, and R is an alkyl, aryl, or aralkyl having 1 to 20 carbon atoms).

Specific examples of a halogenated sulfonyl compound having an alkenyl group include the following:

o-, m-, p-$CH_2$=CH-$(CH_2)_n$-$C_6H_4SO_2X$, and
o-, m-, p-$CH_2$=CH-$(CH_2)_n$-O-$C_6H_4$-$SO_2X$

(wherein X is chlorine, bromine, or iodine, and n is an integer of 0 to 20).

Specific examples of an organic halide having a crosslinkable silyl group include, but not limited to, compounds with a structure represented by formula 8:

$$R^6R^7C(X)\text{-}R^8\text{-}R^9\text{-}C(H)\ (R^5)CH_2\text{-}[Si(R^{11})_{2-b}(Y)_bO]_m\text{-}Si(R^{12})_{3-a}(Y)_a \qquad (8)$$

(wherein $R^5$, $R^6$, $R^7$, $R^8$, $R^9$, and X represent the same as the above, and $R^{11}$ and $R^{12}$ each represent alkyl, aryl, or aralkyl having 1 to 20 carbon atoms, or a triorganosiloxy group represented by $(R')_3SiO$- (the three R's are each a monovalent hydrocarbon group having 1 to 20 carbon atoms and may be the same or different) ; when two or more groups $R^{11}$ or $R^{12}$ are present, they may be the same or different; Y represents a hydroxyl group or a hydrolyzable group, and when two or more groups Y are present, they may be the same or different; a represents 0, 1, 2, or 3; b represents 0, 1, or 2; m represents an integer of 0 to 19; and a + mb ≥1 is satisfied).

Specific examples of the compounds represented by formula 8 include the following:

$XCH_2C(O)O(CH_2)_nSi(OCH_3)_3$,
$CH_3C(H)(X)C(0)\ O(CH_2)_nSi(OCH_3)_3$,
$(CH_3)_2C(X)C(O)O(CH_2)_nSi(OCH_3)_3$,
$XCH_2C(O)O(CH_2)_nSi(CH_3)(OCH_3)_2$,
$CH_3C(H)(X)C(O)O(CH_2)_nSi(CH_3)(OCH_3)_2$, and
$(CH_3)_2C(X)C(O)O(CH_2)_nSi(CH_3)(OCH_3)_2$

(wherein X is chlorine, bromine, or iodine, and n is an integer of 0 to 20);

$XCH_2C(O)O(CH_2)_nO(CH_2)_mSi(OCH_3)_3$,
$H_3CC(H)(X)C(O)O(CH_2)_nO(CH_2)_mSi(OCH_3)_3$,
$(H_3C)_2C(X)C(O)O(CH_2)_nO(CH_2)_mSi(OCH_3)_3$,

$CH_3CH_2C(H)(X)(O)O(CH_2)_nO(CH_2)_mSi(OCH_3)_3$,
$XCH_2C(O)O(CH_2)_nO(CH_2)_mSi(CH_3)(OCH_3)_2$,
$H_3CC(H)(X)C(O)O(CH_2)_nO(CH_2)_m$-$Si(CH_3)(OCH_3)_2$,
$(H_3C)_2C(X)C(O)O(CH_2)_nO(CH_2)_m$-$Si(CH_3)(OCH_3)_2$, and
$CH_3CH_2C(H)(X)C(O)O(CH_2)_nO(CH_2)_m$-$Si(CH_3)(OCH_3)_2$,

(wherein X is chlorine, bromine, or iodine, n is an integer of 1 to 20, and m is an integer of 0 to 20); and

o, m, p-$XCH_2$-$C_6H_4$-$(CH_2)_2Si(OCH_3)_3$,
o, m, p-$CH_3C(H)(X)$-$C_6H_4$-$(CH_2)_2Si(OCH_3)_3$,
o, m, p-$CH_3CH_2C(H)(X)$-$C_6H_4$-$(CH_2)_2Si(OCH_3)_3$,
o, m, p-$XCH_2$-$C_6H_4$-$(CH_2)_3Si(OCH_3)_3$,
o, m, p-$CH_3C(H)(X)$-$C_6H_4$-$(CH_2)_3Si(OCH_3)_3$,
o, m, p-$CH_3CH_2C(H)(X)$-$C_6H_4$-$(CH_2)_3Si(OCH_3)_3$,
o, m, p-$XCH_2$-$C_6H_4$-$(CH_2)_2$-O-$(CH_2)_3Si(OCH_3)_3$,
o, m, p-$CH_3C(H)(X)$-$C_6H_4$-$(CH_2)_2$-O-$(CH_2)_3Si(OCH_3)_3$,
o, m, p-$CH_3CH_2C(H)(X)$-$C_6H_4$-$(CH_2)_2$-O-$(CH_2)_3Si(OCH_3)_3$,
o, m, p-$XCH_2$-$C_6H_4$-O-$(CH_2)_3Si(OCH_3)_3$,
o, m, p-$CH_3C(H)(X)$-$C_6H_4$-O-$(CH_2)_3Si(OCH_3)_3$,
o, m, p-$CH_3CH_2C(H)(X)$-$C_6H_4$-O-$(CH_2)_3$-$Si(OCH_3)_3$,
o, m, p-$XCH_2$-$C_6H_4$-O-$(CH_2)_2$-O-$(CH_2)_3$-$Si(OCH_3)_3$,
o, m, p-$CH_3C(H)(X)$-$C_6H_4$-O-$(CH_2)_2$-O-$(CH_2)_3Si(OCH_3)_3$, and
o, m, p-$CH_3CH_2C(H)(X)$-$C_6H_4$-O-$(CH_2)_2$-O-$(CH_2)_3Si(OCH_3)_3$

(wherein X is chlorine, bromine, or iodine).

Other examples of the organic halide having a crosslinkable silyl group include compounds with a structure represented by formula 9:

$$(R^{12})_{3-a}(Y)_aSi\text{-}[OSi(R^{11})_{2-b}(Y)_b]_m\text{-}CH_2\text{-}C(H)\,(R^5)\text{-}R^9\text{-}C(R^6)(X)\text{-}R^{10}\text{-}R^7 \qquad (9)$$

(wherein $R^5$, $R^6$, $R^7$, $R^9$, $R^{10}$, $R^{11}$, $R^{12}$, a, b, m, X and Y represent the same as the above).

Specific examples of the compounds represented by formula 9 include the following:

$(CH_3O)_3SiCH_2CH_2C(H)(X)C_6H_5$,
$(CH_3O)_2(CH_3)SiCH_2CH_2C(H)(X)C_6H_5$,
$(CH_3O)_3Si(CH_2)_2C(H)(X)$-$CO_2R$,
$(CH_3O)_2(CH_3)S_i(CH_2)_2C(H)(X)$-$CO_2R$,
$(CH_3O)_3Si(CH_2)_3C(H)(X)$-$CO_2R$,
$(CH_3O)_2(CH_3)Si(CH_2)_3C(H)(X)$-$CO_2R$,
$(CH_3O)_3Si(CH_2)_4C(H)(X)$-$CO_2R$,
$(CH_3O)_2(CH_3)Si\ (CH_2)_4C(H)(X)$-$CO_2R$,
$(CH_3O)_3Si(CH_2)_9C(H)(X)$-$CO_2R$,
$(CH_3O)_2(CH_3)Si(CH_2)_9C(H)(X)$-$CO_2R$,
$(CH_3O)_3Si(CH_2)_3C(H)(X)$-$C_6H_5$,
$(CH_3O)_2(CH_3)Si\ (CH_2)_3C(H)(X)$-$C_6H_5$,
$(CH_3O)_3Si(CH_2)_4C(H)(X)$-$C_6H_5$, and
$(CH_3O)_2(CH_3)Si\ (CH_2)_4C(H)(X)$-$C_6H_5$

(wherein X is chlorine, bromine, or iodine, and R is alkyl, aryl, or aralkyl having 1 to 20 carbon atoms).

Examples of the hydroxyl group-containing organic halide or halogenated sulfonyl compound include, but not limited to, the following:

$$HO\text{-}(CH_2)_n\text{-}OC(O)C(H)\,(R)\,(X)$$

(wherein X is chlorine, bromine, or iodine, R is a hydrogen atom or alkyl, aryl, or aralkyl having 1 to 20 carbon atoms, and n is an integer of 1 to 20).

Examples of the amino group-containing organic halide or halogenated sulfonyl compound include, but not limited to, the following:

$H_2N-(CH_2)_n-OC(O)C(H)(R)(X)$

(wherein X is chlorine, bromine, or iodine, R is a hydrogen atom or alkyl, aryl, or aralkyl having 1 to 20 carbon atoms, and n is an integer of 1 to 20).

Examples of the epoxy group-containing organic halide or halogenated sulfonyl compound include, but not limited to, the following:

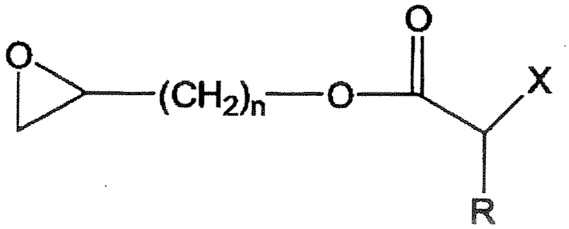

(wherein X is chlorine, bromine, or iodine, R is a hydrogen atom or alkyl, aryl, or aralkyl having 1 to 20 carbon atoms, and n is an integer of 1 to 20).

In order to obtain a polymer having at least two terminal structures of the present invention per molecule, an organic halide or halogenated sulfonyl compound having at least two initiation points is preferably used as the initiator. Examples of such a compound include the following:

o,m,p-$X—CH_2—C_6H_4-CH_2—X$

o,m,p- 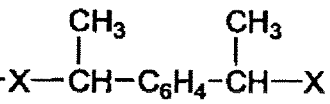 o,m,p- 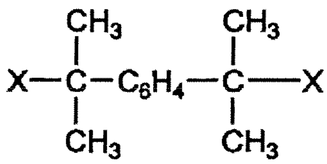

(wherein $C_6H_4$ is a phenylene group, and X is chlorine, bromine, or iodine.)

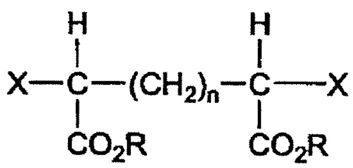 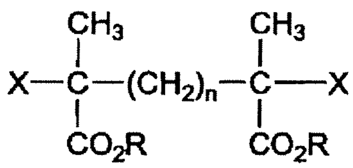

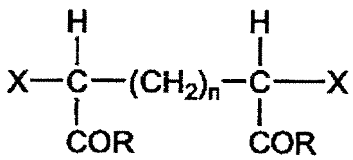 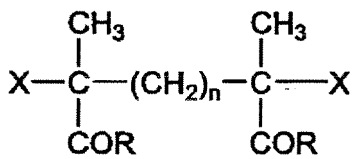

(wherein R is an alkyl, aryl, or aralkyl group having 1 to 20 carbon atoms, n is an integer of 0 to 20, and X is chlorine, bromine, or iodine.)

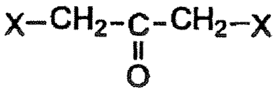
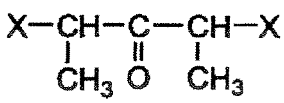
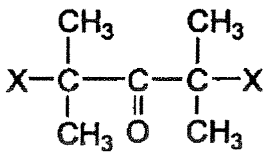

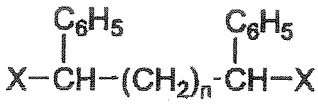

(wherein X is chlorine, bromine, or iodine, and n is an integer of 0 to 20.)

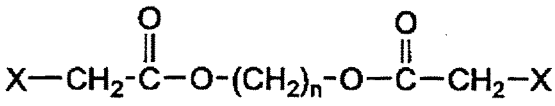

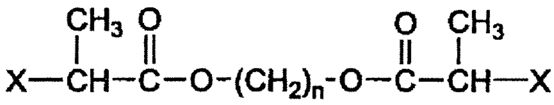

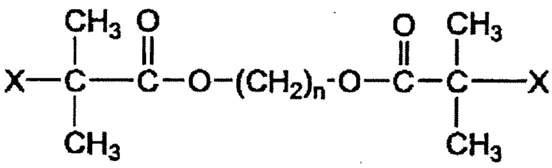

(wherein n is an integer of 1 to 20, and X is chlorine, bromine, or iodine.)

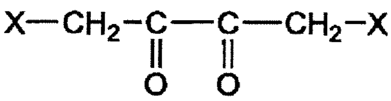
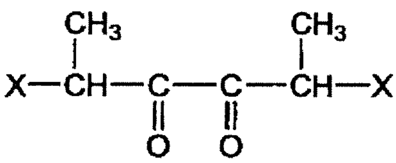
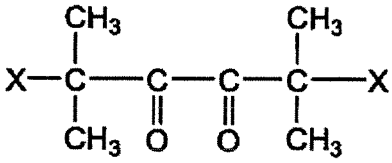

o,m,p-
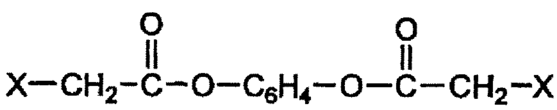

o,m,p- 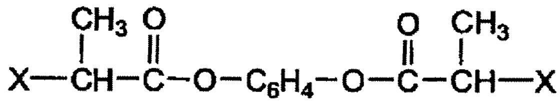

o,m,p- 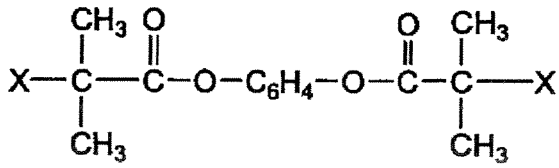

o,m,p- X—$SO_2$-$C_6H_4$-$SO_2$—X

(wherein X is chlorine, bromine, or iodine.)

The vinyl monomer used in the polymerization is not particularly limited, and any of the compounds listed above can be preferably used.

The transition metal complex used as the polymerization catalyst is not particularly limited, but a metal complex composed of a VII, VIII, IX, X, or XI group element in the periodic table as a central metal is preferred. A complex of zero-valent copper, monovalent copper, divalent ruthenium, divalent iron, or divalent nickel is more preferred. Among these complexes, a copper complex is most preferred. Specific examples of a monovalent copper compound include cuprous chloride, cuprous bromide, cuprous iodide, cuprous cyanide, cuprous oxide, and cuprous perchlorate. When a copper compound is used, a ligand, such as 2,2'-bipyridyl or its derivative, 1,10-phenanthroline or its derivative, or polyamine, e.g., tetramethylethylenediamine, pentamethyldiethylenetriamine, or hexamethyl tris(2-aminoethyl)amine, can be added for increasing catalyst activity. Also, a tristriphenylphosphine complex ($RuCl_2(PPh_3)_3$) of divalent ruthenium chloride is suitable as the catalyst. When a ruthenium compound is used, an aluminum alkoxide is added as an activator. Furthermore, a bistriphenylphosphine complex ($FeCl_2(PPh_3)_2$) of divalent iron, a bistriphenylphosphine complex ($NiCl_2(PPh_3)_2$) of divalent nickel, or a bistributylphosphine complex ($NiBr_2(PBu_3)_2$) of divalent nickel is preferred as the catalyst.

The polymerization can be performed without a solvent or in any of various solvents. Examples of the solvent include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrite solvents, such as acetonitrile, propionitrile, and benzonitrile; ester solvents, such as ethyl acetate and butyl acetate; and carbonate solvents, such as ethylene carbonate and propylene carbonate. These solvents can be used alone or as a mixture of two or more. The polymerization can be performed in a range of room temperature to 200°C, and preferably 50°C to 150°C.

<Introduction of functional group>

The process for producing polymer (I) is not particularly limited, but polymer (I) can be produced by, for example, preparing a vinyl polymer having a reactive functional group by the above-described method, and then substituting the reactive functional group with a substituent having a (meth)acryloyl group. The introduction of a terminal functional group in the polymer of the present invention will be described below.

The process for introducing a (meth) acryloyl group to an end of the vinyl polymer is not particularly limited, but the following process can be used:

(Introduction process 1) Process of reacting a vinyl polymer having a halogen group at an end with a compound represented by formula 2:

$$M^{+-}OC(O)C(R^a)=CH_2 \qquad (2)$$

(wherein $R^a$ represents hydrogen or an organic group having 1 to 20 carbon atoms, and $M^+$ represents an alkali metal ion or quaternary ammonium ion).

As the vinyl polymer having a halogen group at an end, a polymer having a terminal structure represented by formula 3 is preferred:

$-CR^1R^2X$ (3)

(wherein $R^1$ and $R^2$ each represent a group bonded to an ethylenically unsaturated group of a vinyl monomer, and X represents chlorine, bromine, or iodine).
(Introduction process 2) Process of reacting a vinyl polymer having a hydroxyl group at an end with a compound represented by formula 4:

$X^1C(O)C(R^a)=CH_2$ (4)

(wherein $R^a$ represents hydrogen or an organic group having 1 to 20 carbon atoms, and $X^1$ represents chlorine, bromine, or a hydroxyl group).
(Introduction process 3) Process of reacting a vinyl polymer having a hydroxyl group at an end with a diisocyanate compound and then reacting the residual isocyanate group with a compound represented by formula 5:

$HO-R'-OC(O)C(R^a)=CH_2$ (5)

(wherein $R^a$ represents hydrogen or an organic group having 1 to 20 carbon atoms, and R' represents a divalent organic group having 2 to 20 carbon atoms).

Each of these processes will be described in detail below.

<Introduction process 1>

Introduction process 1 includes reacting a vinyl polymer having a halogen group at an end with a compound represented by formula (2):

$M^{+-}OC(O)C(R^a)=CH_2$ (2)

(wherein $R^a$ represents hydrogen or an organic group having 1 to 20 carbon atoms, and $M^+$ represents an alkali metal ion or quaternary ammonium ion).
Although the vinyl polymer having a halogen group at an end is not particularly limited, a polymer having a terminal structure represented by formula (3) is preferred:

$-CR^1R^2X$ (3)

(wherein $R^1$ and $R^2$ each represent a group bonded to an ethylenically unsaturated group of a vinyl monomer, and X represents chlorine, bromine, or iodine).
The vinyl polymer having a halogen group at an end, particularly the vinyl polymer having the terminal structure represented by formula (3), can be produced by a process of polymerizing a vinyl monomer using the organic halide or halogenated sulfonyl compound as the initiator and the transition metal complex as the catalyst, or a process of polymerizing a vinyl monomer using a halide as the chain transfer agent. However, the former process is preferred.
The compound represented by formula (2) is not particularly limited.
Organic group $R^a$ having 1 to 20 carbon atoms is exemplified by the same as the above. Specific examples of $R^a$ include -H, $-CH_3$, $-CH_2CH_3$, $-(CH_2)_nCH_3$ (n represents an integer of 2 to 19), $-C_6H_5$, $-CH_2OH$, and -CN. Among these groups, -H and $-CH_3$ are preferred.
$M^+$ is a counter cation of oxyanion, and an alkali metal ion, a quaternary ammonium ion, or the like can be used. Examples of an alkali metal ion include lithium ion, sodium ion, and potassium ion. Examples of a quaternary ammonium ion include tetramethylammonium ion, tetraethylammonium ion, tetrabenzylammonium ion, trimethyldodecylammonium ion, tetrabutylammonium ion, and dimethylpiperidiniuum ion. $M^+$ is preferably an alkali metal ion, and more preferably sodium ion or potassium ion.
The oxyanion in formula (2) is preferably used in an amount of 1 to 5 equivalents and more preferably 1.0 to 1. 2 equivalents relative to the halogen terminal represented by formula (3).
The solvent used for carrying out the reaction is not particularly limited, but a polar solvent is preferred because the reaction is nucleophilic substitution reaction. Examples of the solvent include tetrahydrofuran, dioxane, diethyl ether, acetone, dimethylsulfoxide, dimethylformamide, dimethylacetamide, hexamethylphosphoric triamide, and acetonitrile.
The reaction temperature is not particularly limited, but it is preferably 0 to 150°C and more preferably 10°C to 100°C.

<Introduction process 2>

Introduction process 2 includes reacting a vinyl polymer having a hydroxyl group at an end with a compound represented by formula (4):

$$X^1C(O)C(R^a)=CH_2 \qquad (4)$$

(wherein $R^a$ represents hydrogen or an organic group having 1 to 20 carbon atoms, and $X^1$ represents chlorine, bromine, or a hydroxyl group).

The compound represented by formula (4) is not particularly limited.

As organic group $R^a$ having 1 to 20 carbon atoms, the same as described above can be used. Specific examples of $R^a$ include -H, $-CH_3$, $-CH_2CH_3$, $-(CH_2)_nCH_3$ (n represents an integer of 2 to 19), $-C_6H_5$, $-CH_2OH$, and -CN. Among these groups, -H and $-CH_3$ are preferred.

The vinyl polymer having a hydroxyl group at an end can be produced by a process of polymerizing a vinyl monomer using the organic halide or halogenated sulfonyl compound as the initiator and the transition metal complex as the catalyst, or a process of polymerizing a vinyl monomer using a hydroxyl group-containing compound as the chain transfer agent. However, the former process is preferred. The process for producing the vinyl polymer having a hydroxyl group at an end is not particularly limited, but examples of the process include the following:

(a) A process of reacting a second monomer such as a compound having both a polymerizable alkenyl group and a hydroxyl group in its molecule represented by formula (10) below in living radical polymerization for synthesizing a vinyl polymer.

$$H_2C=C(R^{13})-R^{14}-R^{15}-OH \qquad (10)$$

(wherein $R^{13}$ represents a hydrogen atom or an organic group having 1 to 20 carbon atoms, $R^{14}$ represents -C (O) O- (ester group) or an o-, m-, or p-phenylene group, and $R^{15}$ represents a direct bond or a divalent organic group having 1 to 20 carbon atoms, which may contain at least one ether bond).
In the formula, $R^{13}$ is preferably a hydrogen atom or a methyl group. The compound having an ester group as $R^{14}$ is a (meth)acrylate compound, and the compound having a phenylene group as $R^{14}$ is a styrene compound.
The time to react the compound having both a polymerizable alkenyl group and a hydroxyl group in its molecule is not particularly limited. However, particularly when rubber properties are expected, the second monomer is preferably reacted at the final stage of polymerization reaction or after the completion of reaction of a predetermined monomer.

(b) A process of reacting a second monomer such as a compound having both a low-polymerizable alkenyl group and a hydroxyl group in its molecule at the final stage of polymerization reaction or after the completion of reaction of a predetermined monomer in living radical polymerization for synthesizing a vinyl polymer.
The compound is not particularly limited, but a compound represented by formula (11) or the like can be used.

$$H_2C=C(R^{13})-R^{16}-OH \qquad (11)$$

(wherein $R^{13}$ represent the same as the above, and $R^{16}$ represents a divalent organic group having 1 to 20 carbon atoms, which may contain at least one ether bond).
The compound represented by formula (11) is not particularly limited, but an alkenyl alcohol, such as 10-undecenol, 5-hexenol, or allyl alcohol, is preferred from the viewpoint of easy availability.

(c) A process of introducing a terminal hydroxyl group by hydrolysis of a carbon-halogen bond represented by formula (3) or by reacting a hydroxyl group-containing compound with a halogen of a vinyl polymer having at least one carbon-halogen bond represented by formula (3), which is produced by atom transfer radical polymerization, as disclosed in Japanese Kokai Publication Hei-04-132706.

(d) A process of introducing a halogen by reacting a vinyl polymer having at least one carbon-halogen bond represented by formula (3) and produced by atom transfer radical polymerization with a stabilized on represented by formula (12) having a hydroxyl group.

$$M^+C^-(R^{17})(R^{18})-R^{16}-OH \qquad (12)$$

(wherein $R^{16}$ and $M^+$ represent the same as the above, and $R^{17}$ and $R^{18}$ each represent an electrophilic group

capable of stabilizing carbanion $C^-$ or one of $R^{17}$ and $R^{18}$ represents an electrophilic group, the other representing a hydrogen atom or an alkyl or phenyl group having 1 to 10 carbon atoms).
Examples of the electrophilic group as $R^{17}$ and $R^{18}$ include $-CO_2R$ (ester group), -C(O)R (keto group), -CON ($R_2$) (amido group), -COSR (thioester group), -CN (nitrile group), and $-NO_2$ (nitro group). Substituent R is an alkyl group having 1 to 20 carbon atoms, an aryl group having 6 to 20 carbon atoms, or an aralkyl group having 7 to 20 carbon atoms, and preferably an alkyl or phenyl group having 1 to 10 carbon atoms. In particular, $-CO_2R$, -C(O)R, and -CN are preferred as $R^{17}$ and $R^{18}$.

(e) A process of reacting a vinyl polymer having at least one carbon-halogen bond represented by formula (3) and produced by atom transfer radical polymerization with an elemental metal, such as zinc, or an organometallic compound to prepare an enolate anion, and then reacting the anion and an aldehyde or ketone.

(f) A process of reacting a vinyl polymer having at least one terminal halogen, preferably at least one halogen represented by formula (3), with a hydroxyl group-containing oxy anion represented by formula (13) or a hydroxyl group-containing carboxylate anion represented by formula (14) to substitute the halogen with a hydroxyl group-containing substituent.

$$HO\text{-}R^{16}\text{-}O^-M^+ \qquad (13)$$

(wherein $R^{16}$ and $M^+$ represent the same as the above.)

$$HO\text{-}R^{16}\text{-}C(O)O^-M^+ \qquad (14)$$

(wherein $R^{16}$ and $M^+$ represent the same as the above.)

Among processes (a) and (b) for introducing a hydroxyl group without directly involving a halogen, process (b) is more preferred from the viewpoint of ease of control.
Among processes (c) to (f) for introducing a hydroxyl group by converting the halogen of the vinyl polymer having at least one carbon-halogen bond, process (f) is more preferred from the viewpoint of ease of control.
The compound represented by formula (4) is preferably used in an amount of 1 to 10 equivalents and more preferably 1 to 5 equivalents relative to the terminal hydroxyl group of the vinyl polymer.
The solvent used for carrying out the reaction is not particularly limited, but a polar solvent is preferred because the reaction is nucleophilic substitution reaction. Examples of the solvent include tetrahydrofuran, dioxane, diethyl ether, acetone, dimethylsulfoxide, dimethylformamide, dimethylacetamide, hexamethylphosphoric triamide, and acetonitrile.
The reaction temperature is not particularly limited, but it is preferably 0 to 150°C and more preferably 10 to 100°C.

<Introduction process 3>

Introduction process 3 includes reacting a vinyl polymer having a hydroxyl group at an end and a diisocyanate compound and then reacting the residual isocyanate group with a compound represented by formula (5):

$$HO\text{-}R'\text{-}OC(O)C(R^a)\text{=}CH_2 \qquad (5)$$

(wherein $R^a$ represents a hydrogen atom or an organic group having 1 to 20 carbon atoms, and R' represents a divalent organic group having 2 to 20 carbon atoms).
Organic group $R^a$ having 1 to 20 carbon atoms is exemplified by the same as the above. Specific examples of $R^a$ include -H, $-CH_3$, $-CH_2CH_3$, $-(CH_2)_nCH_3$ (n represents an integer of 2 to 19), $-C_6H_5$, $-CH_2OH$, and -CN. Among these groups, -H and $-CH_3$ are preferred.
As divalent organic group R' having 2 to 20 carbon atoms, for example, an alkylene group (ethylene, propylene, butylenes, or the like) having 2 to 20 carbon atoms, an alkylene group having 6 to 20 carbon atoms, an alkylene group having 7 to 20 carbon atoms, or the like can be used.
The compound represented by formula (5) is not particularly limited, but 2-hydroxypropyl methacrylate or the like is particularly preferred.
The vinyl polymer having a hydroxyl group at an end is as described above.
The diisocyanate compound is not particularly limited, and any known compound can be used. Examples of the compound include toluylene diisocyanate, 4,4'-diphenylmethane diisocyanate, hexamethylene diisocyanate, xylylene diisocyanate, metaxylylene diisocyanate, 1,5-naphthalene diisocyanate, hydrogenated diphenylmethane diisocyanate,

hydrogenated toluylene diisocyanate, hydrogenated xylylene diisocyanate, and isophorone diisocyanate. These compounds can be used alone or in combination of two or more. Also, a block isocyanate may be used.

In order to achieve higher weather resistance, a diisocyanate compound with no aromatic ring, such as hexamethylene diisocyanate or hydrogenated diphenylmethane diisocyanate, is preferably used.

The amount of the diisocyanate compound used is preferably 1 to 10 equivalents and more preferably 1 to 5 equivalents relative to the terminal hydroxyl group of the vinyl polymer.

The reaction solvent is not particularly limited, but an aprotic solvent is preferred. The reaction temperature is not particularly limited, but it is preferably 0 to 250°C and more preferably 20 to 200°C.

The compound represented by formula (5) is preferably used in an amount of 1 to 10 equivalents and more preferably 1 to 5 equivalents relative to the residual isocyanate group.

The reaction solvent is not particularly limi ted, but an aprotic solvent is preferred. The reaction temperature is not particularly limited, but it is preferably 0 to 250°C and more preferably 20 to 200°C.

<Gasket formed on site>

The composition for on-site forming gaskets of the present invention includes 10 to 100% by weight of polymer (I), and a cured product prepared by curing the composition has a compression set of 40% or less according to the definition of JIS K 6262. When the content of polymer (I) in the composition is below 10% by weight, sufficient weather resistance, heat resistance, and compression set may be not obtained. The content of polymer (I) is 10 to 100% by weight, preferably 15 to 99% by weight, and more preferably 20 to 83% by weight. In particular, in application to on-site forming of a gasket, the compression set under the above-mentioned conditions is preferably 40% or less because heat resistance and sealing property are required.

The cured product of the composition for on-site forming gaskets of the present invention preferably exhibits excellent oil resistance, for example, higher resistance than that of a cured product from a composition containing a polymer which is prepared by substituting the repeat unit of the main chain of polymer (I) with butyl acrylate alone, in any one item of the immersion test according to JIS K 6258 for the land use 3-5 lubricating oil specified in JIS K 2215.

The oil resistance is measured by the immersion test according to JIS K 6258 for the land use 3-5 lubricating oil specified in JIS K 2215.

In the present invention, when the cured product shows higher oil resistance than that of a cured product from a butyl acrylate homopolymer having the same structure in any one item of the immersion test according to JIS K 6258, the oil resistance of the cured product is regarded as excellent. The items of the immersion test according to JIS K 6258 include a dimensional change, a change in surface area, a change in hardness, mechanical properties such as tensile strength, a rate of mass change, and a rate of volume change. The cured product preferably shows higher oil resistance than that of a cured product from a butyl acrylate homopolymer having the same structure in any one of these items. In particular, the cured product more preferably shows higher oil resistance than that of a cured product from a butyl acrylate homopolymer having the same structure with respect to the item of a rate of mass change and/or a rate of volume change.

In the immersion test according to JIS K 6258, the cured product preferably shows a rage of mass change of 50% or less before and after immersion. With a rate of mass change of over 50%, the cured product tends to absorb oil to degrade the mechanical properties such as strength and the like.

The cured product more preferably shows a lower rate of volume change than that of the cured product from the butyl acrylate homopolymer having the same structure before and after immersion in the lubricating oil. This is because when the rate of volume change is higher than that of the cured product from the butyl acrylate homopolymer having the same structure, the cured product tends to be swollen to fail to maintain the physical properties before immersion.

The composition for on-site forming gaskets of the present invention is not limited, and a polymerizable monomer and/or oligomer and various additives can be added in a range which causes no deterioration in the effect of the invention, for improving surface curability, imparting toughness, or decreasing the viscosity to improve workability.

As the polymerizable monomer and/or oligomer, a monomer and/or oligomer having a radical polymerizable group or a monomer and/or oligomer having an anionic polymerizable group is preferred, and a monomer and/or oligomer having a (meth)acryloyl group is more preferred. The term "(meth)acryloyl group" means a group represented by general formula (1), $-OC(O)C(R^a)=CH_2$, (wherein $R^2$ represents hydrogen or an organic group having 1 to 20 carbon atoms). In the formula, $R^a$ is preferably a hydrocarbon group having 1 to 20 carbon atoms. Examples of the radical polymerizable group include acryl functional groups, such as a (meth)acryl group, a styrene group, an acrylonitrile group, a vinylester group, an N-vinylpyrrolidone group, an acrylamide group, a conjugated diene group, a vinyl ketone group, and a vinyl chloride group. In particular, a monomer and/or oligomer having a (meth)acryloyl group similar to the polymer of the present invention is preferred. Examples of the anionic polymerizable group include (meth)acryl, styrene, acrylonitrile, N-vinylpyrrolidone, an acrylamide, conjugated diene, and vinyl ketone. In particular, a monomer and/or oligomer having an acryl functional group similar to the polymer of the present invention is preferred.

Specific examples of the monomer include (meth) acrylate monomers, cyclic acrylates, N-vinylpyrrolidone, styrene monomers, acrylonitrile, N-vinylpyrrolidone, acrylamide monomers, conjugated diene monomers, and vinyl ketone monomers. Examples of (meth)acrylate monomers include n-butyl (meth)acrylate, 2-ethylhexyl (meth)acrylate, isooctyl (meth)acrylate, isonoyl (meth)acrylate, and compounds represented by the following formulae:

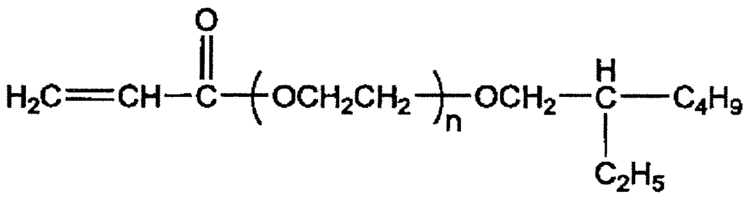

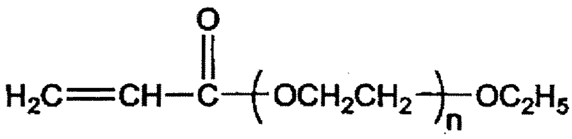

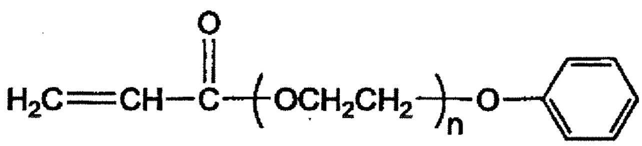

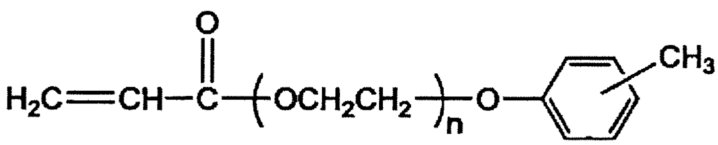

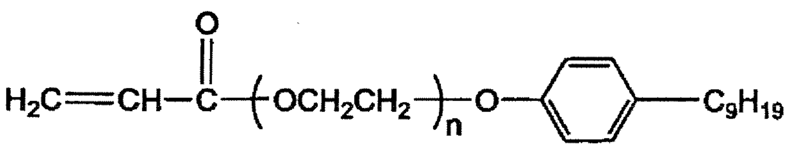

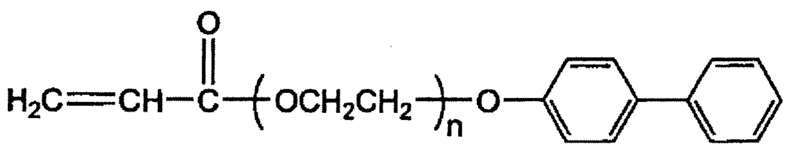

(wherein n represents 0 or an integer of 1 to 40.)

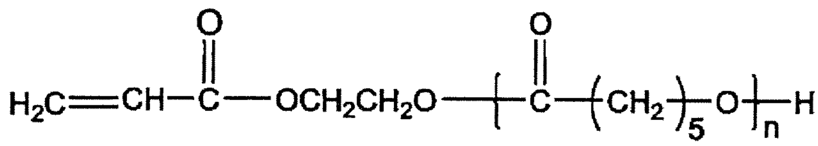

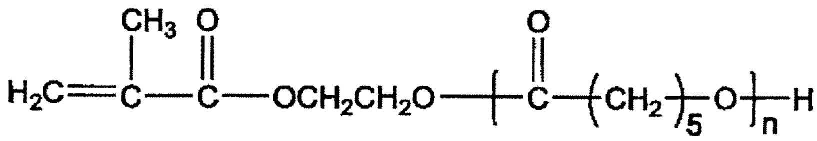

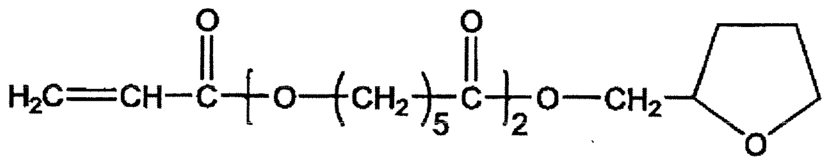

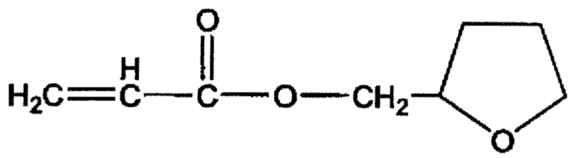

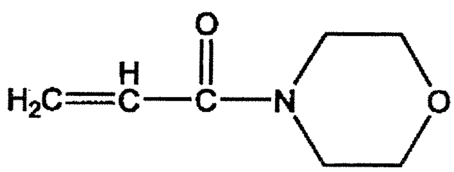

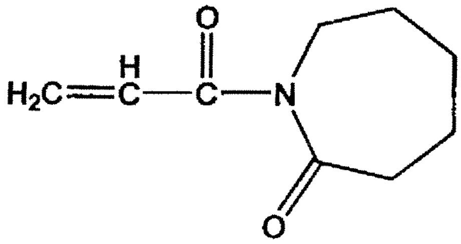

(wherein n represents 0 or an integer of 1 to 40.)

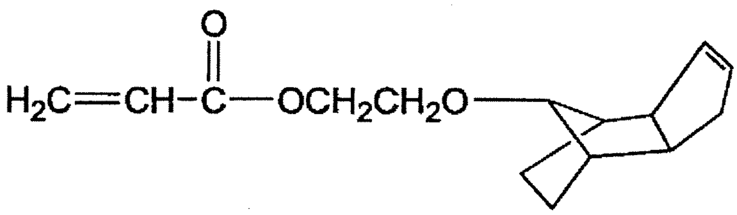

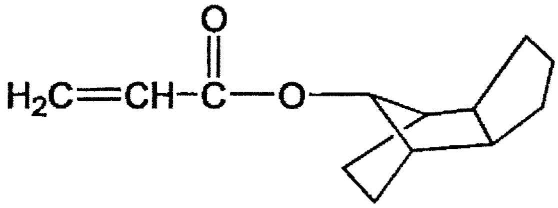

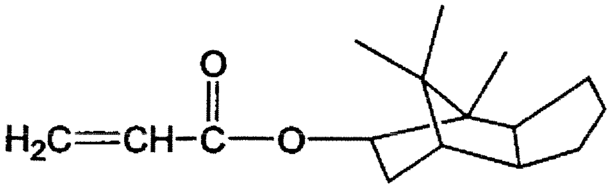

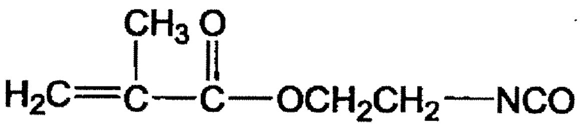

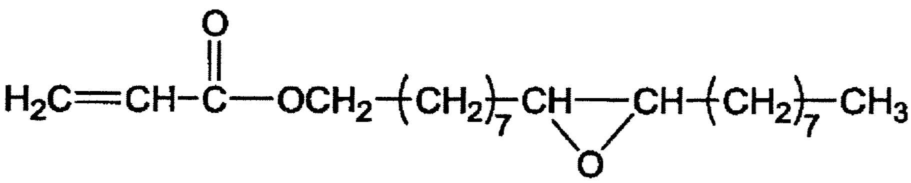

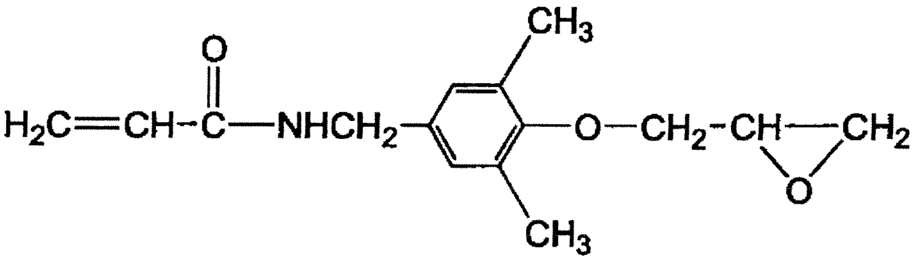

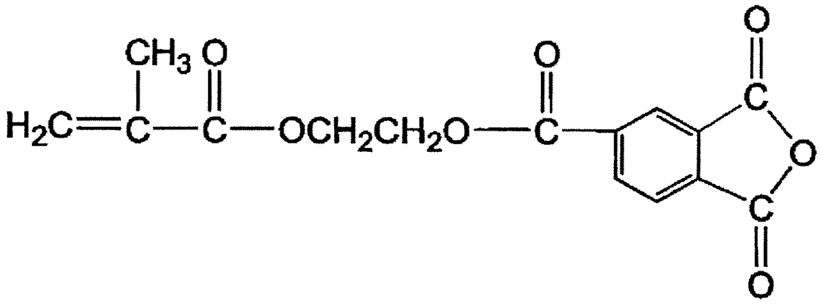

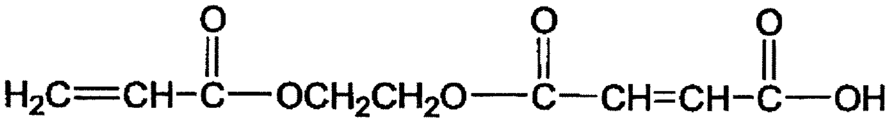

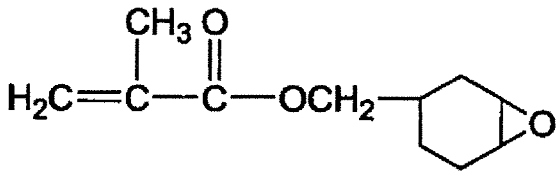

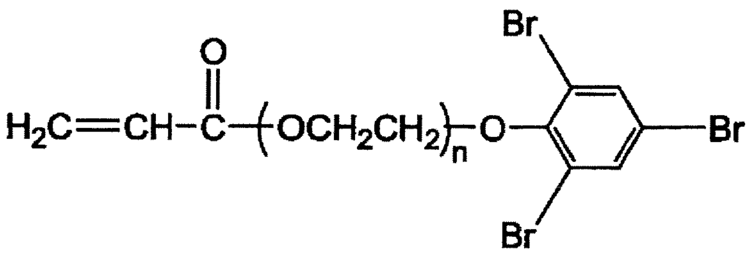

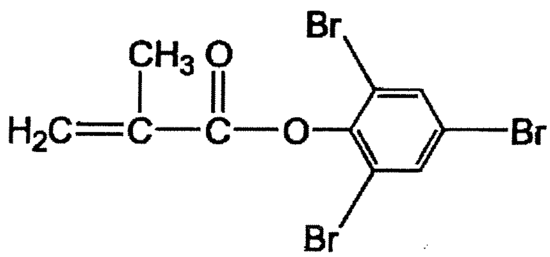

(wherein n represents 0 or an integer of 1 to 40.)

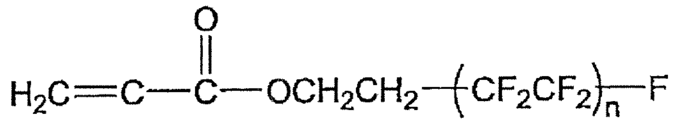

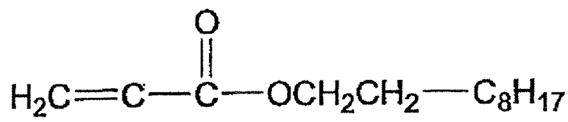

(wherein n represents 0 or an integer of 1 to 20.)

Examples of the styrene monomers include styrene and α-methylstyrene, examples of the acrylamide monomers include acrylamide and N,N-dimethylacrylamide, examples of the conjugated diene monomers include butadiene and isoprene, and example of the vinyl ketone monomers include methyl vinyl ketone.

Examples of polyfunctional monomers include trimethylolpropane triacrylate, neopentylglycol polypropoxydiacrylate, trimethylolpropane polyethoxytriacrylate, bisphenol F polyethoxydiacrylate, bisphenol A polyethoxydiacrylate, dipentaerythritol polyhexanolide hexacrylate, tris(hydroxyethyl)isocyanurate polyhexanolide triacrylate, tricyclodecanedimethylol diacrylate 2-(2-acryloyloxy-1,1-dimethyl)-5-ethyl-5-acryloyloxymethyl-1,3-dioxane, tetrabromobisphenol A diethoxydiacrylate, 4,4-dimercaptodiphenyl sulfide dimethacrylate, polytetraethylene glycol diacrylate, 1,9-nonanediol diacrylate, and ditrimethylolpropane tetraacrylate.

Examples of the oligomer include epoxy acrylate resins, such as bisphenol A epoxy acrylate resins, phenol novolac epoxy acrylate resins, and cresol novolac epoxy acrylate resins; COOH-modified epoxy acrylate resins; urethane acrylate resins prepared by reacting urethane resins with a hydroxyl group-containing (meth)acrylate [hydroxyethyl (meth)acrylate, hydroxypropyl (meth)acrylate, hydroxylbutyl (meth)acrylate, pentaerythritol triacrylate, or the like], the urethane resins being prepared from polyols (polytetramethylene glycol, polyester diol of ethylene glycol and adipic acid, ε-caprolactone-modified polyester diol, polypropylene glycol, polyethylene glycol, polycarbonate diol, hydroxyl group-terminated hydrogenated polyisoprene, hydroxyl group-terminated polybutadiene, hydroxyl group-terminated polyisobutylene, and the like) and organic isocyanates (tolylene diisocyanate, isophorone diisocyanate, diphenylmethane diisocyanate, hexamethylene diisocyanate, xylylene diisocyanate, and the like) ; polyester acrylate resins prepared by introducing (meth)acryl groups in the polyols through ester bonds.

The number-average molecular weight of the monomer and/or oligomer having a (meth)acryloyl group is preferably 5,000 or less. In order to improve surface curability and decrease viscosity for improving workability, the molecular weight of the monomer used is more preferably 1,000 or less because of high compatibility.

In general, an organic solvent having a boiling point of 50 to 180°C is preferred in view of excellent workability in coating and excellent drying property before and after curing. Specific examples of the solvent include alcohol solvents, such as methanol, ethanol, isopropanol, n-butanol, and isobutanol; ester solvents, such as methyl acetate, ethyl acetate, butyl acetate, ethylene glycol monoethyl ether, ethylene glycol monoethyl ether acetate, and ethylene glycol monobutyl ether; ketone solvents, such as acetone, methyl ethyl ketone, and methyl isobutyl ketone; aromatic solvents, such as toluene and xylene; and cyclic ether solvents, such as dioxane. These solvents can be used alone or as a mixture of at least two.

From the viewpoint of improvement in strength of a cured product, it is advantageous to add reinforcing silica to the composition for on-site forming gaskets of the present invention. As the reinforcing silica, fumed silica, precipitated silica, or the like can be used. In particular, silica having a particle size of 50 μm or less and a specific surface area of 80 $cm^2/g$ or more is preferred from the viewpoint of a reinforcing effect. Surface-treated silica, for example, silica surface-treated with organosilane, organosilazane, diorganocyclopolysiloxane, or the like, is more preferred because flowability suitable for molding is easily exhibited. Specific examples of the reinforced silica include, but not limited to, fumed silica, e.g., Aerosil manufactured by Nippon Aerosil Co., Ltd., and precipitated silica, e.g., Nipsil manufactured by Nihon Silica Kogyo. The amount of the reinforcing silica added is not particularly limited, but the amount is 0.1 to 100 parts by weight, preferably 0.5 to 80 parts by weight, and particularly preferably 1 to 50 parts by weight relative to the weight of polymer (I). When the adding amount is less than 0.1 part by weight, the effect of improving reinforcement may be insufficient. When the adding amount exceeds 100 parts by weight, the workability of the composition may degrade. The reinforcing silica may be used alone or two or more types of silica may be combined.

The composition for on-site forming gaskets of the present invention may further contain any one of various fillers other than the reinforcing silica according to demand. Examples of the filler include, but not limited to, reinforcing fillers, such as wood flour, pulp, cotton chips, asbestos, glass fibers, carbon fibers, mica, walnut shell flour, chaff flour, graphite, diatomite, white clay, dolomite, silicic anhydride, hydrous silicic acid, and carbon black; fillers, such as heavy calcium carbonate, colloidal calcium carbonate, magnesium carbonate, diatomite, calcined clay, clay, talc, titanium oxide, bentonite, organic bentonite, ferric oxide, colcothar, aluminum fine powder, flint powder, zinc oxide, active zinc white, zinc powder, zinc carbonate, and Shirasu balloon; and fibrous fillers, such as asbestos, glass fibers and glass filaments, carbon fibers, Kevlar fibers, and polyethylene fibers.

Among these fillers, carbon black, calcium carbonate, titanium oxide, and talc are preferred.

When a cured product with low strength and high elongation is desired, a filler mainly selected from titanium oxide, calcium carbonate, talc, ferric oxide, zinc oxide, and Shirasu balloon can be added. In general, calcium carbonate having a small specific surface area may have the insufficient effect of improving the breaking strength, breaking elongation, adhesiveness, and weatherproof adhesiveness of the cured product. Use of calcium carbonate having a larger specific surface area increases the effect of improving the breaking strength, breaking elongation, adhesiveness, and weatherproof adhesiveness of the cured product.

Furthermore, calcium carbonate is more preferably surface-treated with a surface treatment agent. Use of surface-treated calcium carbonate possibly improves the workability of the composition for on-site forming gaskets of the present invention and further improves the effect of improving the adhesiveness and weatherproof adhesiveness of the composition, as compared with use of calcium carbonate not surface-treated. As the surface treatment agent, an organic compound or surfactant, such as a fatty acid, fatty acid soap, or a fatty acid ester, or a coupling agent, such as a silane coupling agent or a titanate coupling agent, can be used. Specific examples of the surface treatment agent include, but not limited to, fatty acids, such as caproic acid, caprylic acid, pelargonic acid, capric acid, undecanoic acid, lauric acid, myristic acid, palmitic acid, stearic acid, behenic acid, and oleic acid; sodium and potassium salts of these fatty acids; and alkyl esters of these fatty acids. Specific examples of the surfactant include sulfate-type anionic surfactants, such polyoxyethylene alkyl ether sulfates and long-chain alcohol sulfates, and sodium and potassium salts thereof; and sulfonic acid-type anionic surfactants, such as alkylbenzenesulfonic acid, alkylnaphthalenesulfonic acid, paraffin sulfonic acid, $\alpha$-olefin sulfonic acid, and alkylsulfosuccinic acid, and sodium and potassium salts thereof. The amount of the surface treatment agent used is preferably in a range of 0.1 to 20% by weight and more preferably in a range of 1 to 5% by weight relative to calcium carbonate. When the amount of the surface treatment agent is less than 0.1% by weight, the effect of improving workability, adhesiveness, and weatherproof adhesiveness may become unsatisfactory. When the amount exceeds 20% by weight, the storage stability of the composition may degrade.

In use of calcium carbonate, colloidal calcium carbonate is preferably used for particularly expecting the effect of improving the thixotropy of the resultant mixture and the breaking strength, breaking elongation, adhesiveness, and weatherproof adhesiveness of the cured product. However, the purpose of use is not limited to this.

On the other hand, heavy calcium carbonate may be added for decreasing the viscosity of the resultant mixture, increasing the amount thereof, and decreasing the cost. In use of the heavy calcium carbonate, the heavy calcium carbonate described below can be used according to demand.

The heavy calcium carbonate is prepared by mechanically grinding and processing natural chalk (whiting), marble, limestone, or the like. The grinding process can be a dry process or wet process. In many cases, a product of wet grinding degrades the storage stability of the composition for on-site forming gaskets of the present invention and is thus undesirable. The ground heavy calcium carbonate is sorted to form products having various average particle sizes. When the effect of improving the breaking strength, breaking elongation, adhesiveness, and weatherproof adhesiveness of the cured product is expected, the specific surface area is, but not limited to, preferably 1.5 $m^2/g$ to 50 $m^2/g$, further preferably 2 $m^2/g$ to 50 $m^2/g$, more preferably 2.4 $m^2/g$ to 50 $m^2/g$, and particularly preferably 3 $m^2/g$ to 50 $m^2/g$. With a specific surface area of less than 1.5 $m^2/g$, the improving effect may be insufficient. Of course, this does not apply to a case in which the heavy calcium carbonate is added only for decreasing the viscosity or increasing the amount.

The specific surface area is measured by an air permeability method (a method for determining a specific surface area from air permeability to a powder-packed layer) according to JIS K 5101. As a measuring device, a SS-100 model specific surface area meter manufactured by Shimadzu Corporation is preferably used.

The above-listed filters may be used alone or in combination of two or more if necessary. For example, when heavy calcium carbonate with a specific surface area of 1.5 $m^2/g$ or more and colloidal calcium carbonate are combined according to demand, an increase in viscosity of the resultant mixture can be moderately suppressed, and the significant effect of improving the breaking strength, breaking elongation, adhesiveness, and weatherproof adhesiveness of the cured product can be expected. However, the combination is not limited to this.

When the filler is used, the filler is preferably added in an amount in a range of 5 to 1,000 parts by weight, more preferably in a range of 20 to 500 parts by weight, and particularly preferably in a range of 40 to 300 parts by weight relative to 100 parts by weight of vinyl polymer (I). When the mixing amount is less than 5 parts by weight, the effect of improving the breaking strength, breaking elongation, adhesiveness, and weatherproof adhesiveness of the cured product may become insufficient. When the mixing amount exceeds 1,000 parts by weight, the workability of the composition may degrade. The fillers may be used alone or in combination of two or more.

The composition for on-site forming gaskets of the present invention preferably includes a (meth)acrylic polymer as a main component, and thus an adhesiveness imparting resin need not necessarily be added. However, any one of various resins can be added. Specific examples of the resins include phenol resins, modified phenol resins cyclopentadiene-phenol resins, xylene resins, coumarone resins, petroleum resins, terpene resins, terpene phenol resins, and rosin ester resins.

The composition for on-site forming gaskets of the present invention may contain various additives, for example, an antiaging agent, a plasticizer, a physical property adjuster, a solvent, etc. for controlling the physical properties.

In a preferred embodiment of the present invention, when an acrylic polymer is used as vinyl polymer (I), the antiaging agent is not necessarily required because the acrylic polymer originally has excellent heat resistance, weather resistance, and durability. However, a conventional known antioxidant or photo-stabilizer can be appropriately used. The antiaging agent can be also used for controlling the polymerization, thereby controlling the physical properties. Known examples of the antioxidant include, but not limited to, various antioxidants, such as the antioxidants described in "Antioxidant Handbook" issued by Taisei Corporation, and the antioxidants described in "Deterioration and Stabilization of Polymer Material" issued by CMC Chemical (235-242). Specific examples of the antioxidants include thioether-based antioxidants, such as MARK PEP-36 and MARK AO-23 (both manufactured by Adeka Argus Chemical Co., Ltd.); and phosphorus-based antioxidants, such as Irgafos 38, Irgafos 168, and Irgafos P-EPQ (all manufactured by Ciba-Geigy of Japan). In particular, the hindered phenol compounds below are preferred. Specific examples of the hindered phenol compounds include 2,6-di-tert-butyl-4-methylphenol, 2,6-di-tert-butyl-4-ethylphenol, mono(di or tri)($\alpha$-methylbenzyl)phenol, 2,2'-methylenebis(4-ethyl-6-bert-butylphenol), 2,2'-methylenebis(4-methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol-bis -[3-(3-tert-butyl-5-methyl-4-hydroxyphenyl)propionate], 1,6-hexanediol-bis [3-(3,5-di-tert-butyl-4-hydroxyphenyl)propionate], 2,4-bis-(n-octylthio)-6 -(4-hydroxy-3,5-di-tert-butylanilino)-1,3,5-triazine, pentaerythrityl-tetrakis [3-(3,5-di-tert-butyl-4-hydroxyphenyl)propionate], 2,2-thio-diethylenebis [3-(3,5-di-tert-butyl-4-hydroxyphenyl)propionate], octadecyl-3-(3,5-di-tert-butyl-4-hydroxyphenyl)propionate, N,N'-hexamethylenebis (3,5-di-tert-butyl-4-hydroxy-hydrocinnamide), 3,5-di-tert-butyl-4-hydroxy-benzylphosphonate diethyl ester, 1,3,5-trimethyl-2,4,6-tris (3,5-di-tert-butyl-4-hydroxybenzyl)benzene, bis(3,5-di-tert-butyl-4-hydroxybenzylphosphonate ethyl) calcium, tris-(3,5-di-tert-butyl-4-hydroxybenzyl) isocyanurate, 2,4-2,4-bis[(octylthio)methyl] o-cresol, N,N'-bis[3-(3,5-di-tert-butyl-4-hydroxyphenyl)propionyl] hydrazine, tris(2,4-di-tert-butylphenyl)phosphite, 2-(5-methyl-2-hydroxyphenyl)benzotriazole, 2-[2-hydroxy-3,5-bis($\alpha$,$\alpha$-dimethylbenzyl)phenyl] -2H-benzotriazole, 2-(3,5-di-tert-butyl-2-hydroxyphenyl)benzotriazole, 2-(3-tert-butyl-5-methyl-2-hydroxyphenyl) -5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole, 2-(2'-hydroxy-5'-tert-octylphenyl)-benzotriazole, methyl-3-[3-tert-butyl-5-(2H-benzotriazol-2-yl)-4- hydroxyphenyl]propionate-polyethylene glycol (molecular weight about 300) condensates, hydroxyphenylbenzotriazole derivatives, 2-(3,5-di-tert-butyl-4-hydroxybenzyl)-2-n-butylmalonate bis (1,2,2,6,6-pentamethyl-4-piperidyl), and 2,4-di-tert-butylphenyl-3,5-di-tert-butyl-4-hydroxybenzoate. Examples of commercial products include, but not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, and NOCRAC DAH (all manufactured by Ouchi Shinko Chemical Industries Co.) ; MARK AO-30, MARK AO-40, MARK AO-50, MARK AO-60, MARK AO-616, MARK AO-635, MARK AO-658, MARK AO-80, MARK AO-15, MARK AO-18, MARK 328, and MARK AO-37 (all manufactured by Adeka Argus Chemical Co., Ltd.); IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all manufactured by Ciba-Geigy of Japan); and Sumilizer GA-80 (manufactured by Sumitomo Chemical Co., Ltd.) . Other examples include monoacrylate phenol antioxidants each having an acrylate group and a phenol group; and nitroxide compounds. Specific examples of the monoacrylate phenol antioxidants include 2-tert-butyl-6-(3-tert-butyl-2-hydroxy-5-methylbenzyl)-4 -methylphenyl acrylate (trade name, Sumilizer GM), and 2,4-di-tert-amyl-6-[1-(3,5-di-tert-amyl-2-hydroxyphenyl) ethyl]phenyl acrylate (trade name, Sumilizer GS). Specific examples of the nitroxide compounds include, but not limited to, nitroxy free radicals derived from cyclic hydroxyamines, such as 2,2,6,6-substituted-1-piperidinyloxy radical and 2,2,5,5-substituted-1-pyrrolidinyloxy radical. As a substituent, an alkyl group having 4 or less carbon atoms, such as methyl or ethyl, is suitable. Specific examples of the nitroxy free radicals include, but not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-plperidinyloxy radical, 2,2,5,5-tetramethyl-1-pyrrolidinyloxy radical, 1,1,3,3-tetramethyl-2-isoindolinyloxy radical, and N, N-di-tert-butylaminoxy radical. Instead of the nitroxy free radical, a stable free radical such as galvinoxyl free radical may be used. The antioxidant may be combined with a photo-stabilizer, and the combination is preferred because the effect is further exhibited, and heat resistance may be particularly improved. A mixture of an antioxidant and a photo-stabilizer, such as Tinuvin C353 or Tinuvin B75 (both manufactured by Ciba-Geigy of Japan), may be used.

Examples of the plasticizer include phthalic acid esters, such as dibutyl phthalate, diheptyl phthalate, di(2-ethylhexyl) phthalate, and butylbenzyl phthalate; non-aromatic dibasic acid esters, such as dioctyl adipate and dioctyl

sebacate; polyalkylene glycol esters, such as diethylene glycol dibenzoate and triethylene glycol dibenzoate; phosphoric acid esters, such as tricresyl phosphate and tributyl phosphate; chlorinated paraffins; hydrocarbon oils, such as alkyldiphenyl and partially hydrogenated terphenyl. These plasticizers can be used alone or in combination according to the purpose of controlling physical properties or quality. However, the plasticizer is not necessarily required. The plasticizer can be added in production of the polymer.

Examples of the solvent usable in production of the polymer include aromatic hydrocarbon solvents, such as toluene and xylene; ester solvents, such as ethyl acetate, butyl acetate, amyl acetate, and cellosolve acetate; and ketone solvents, such as methyl ethyl ketone, methyl isobutyl ketone, and diisobutyl ketone.

Also, the composition for on-site forming gaskets of the present invention may contain any one of various adhesiveness improvers for improving adhesiveness to various supports (plastic films and the like). Examples of the improvers include alkylalkoxysilanes, such as methyltrimethoxysilane, dimethyldimethoxysilane, trimethylmethoxysilane, and n-propyltrimethoxysilane; alkylisopropenoxysilanes, such as dimethyldiisopropenoxysilane, methyltriisopropenoxysilane, and γ-glycidoxypropylmethyldiisopropenoxysilane; functional group-containing alkoxysilanes, such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)-γ-aminopropyltrimethoxysilane, N-(β-aminoethyl)-γ-aminopropylmethyldimethoxysilane, γ-mercaptopropyltrimethoxysilane, γ-mercaptopropylmethyldimethoxysilane; silicone vanishes; and polysiloxanes.

<Curing process>

The composition for on-site forming gaskets of the present invention is preferably cured by active energy rays such as UV or electron beams, or heat, although the curing process is not limited to this. In order to achieve excellent curability and compression set, curing with active energy rays, such as UV or electron beams, is particularly preferable.

<Curing with active energy ray>

When the composition for on-site forming gaskets of the present invention is cured with active energy rays, the composition preferably contains a photopolymerization initiator.

The photopolymerization initiator is not particularly limited, but a photoradical initiator or a photoanion initiator is preferred. In particular, the photoradical initiator is preferred. Examples of the photoradical initiator include acetophenone, propiophenone, benzophenone, xanthol, fluoreine, benzaldehyde, anthraquinone, triphenylamine, carbozole, 3-methylacetophenone, 4-methylacetophenone, 3-pentylacetophenone, 2,2-diethoxyacetophenone, 4-methoxyacetopohenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl) ketone, benzylmethoxyketal, and 2-chlorothioxanthone. These initiators can be used alone or in combination with another compound. For example, the initiator may be combined with an amine, such as diethanolmethylamine, dimethylethanolamine, or triethanolamine, and further combined with an iodonium salt such as diphenyl iodonium chloride, or a dye, such as methylene blue, and an amine. When the photopolymerization initiator is used, if required, a polymerization inhibitor, such as hydroquinone, hydroquinone monomethyl ether, benzoquinone, para-tert-butyl catechol may be added.

Furthermore, a near-infrared light absorbing cationic dye may be used as a near-infrared photopolymerization initiator. As the near-infrared light absorbing cation dye, a dye which is excited with light energy in a range of 650 nm to 1,500 nm, for example, the near-infrared light absorbing cation dye-borate anion complex disclosed in Japanese Kokai Publication Hei-03-111402 and Hei-05-194619, is preferably used. A boron-based sensitizing agent is more preferably combined.

Since it is sufficient that the polymerization system is slightly made optically functional, the amount of the photopolymerization initiator added is, but not limited to, preferably 0.001 to 10 parts by weight relative to 100 parts by weight of the polymer of the composition.

A source of the active energy rays is not particularly limited, but light or electron beams are applied using, for example, a high-pressure mercury lamp, a low-pressure mercury lamp, an electron beam irradiation device, a halogen lamp, a light-emitting diode, or a semiconductor laser depending on the property of the photopolymerization initiator.

In order to sufficiently satisfy the heat resistance and seal property required for gaskets formed on site, curing with active energy rays is preferably performed so that the compression set under the above-mentioned conditions is preferably 30% or less, more preferably 20% or less, and particularly preferably 15% or less.

<Thermal curing>

In thermal curing, the composition for on-site forming gaskets preferably contains a thermopolymerization initiator.

Examples of the thermopolymerization initiator include, but not limited to, azo initiators, peroxides, persulfates, and redox initiators.

Specific examples of suitable azo initiators include, but not limited to, 2,2'-azobis(4-methoxy-2,4-dimethylvaleronitrlle) (VAZO 33), 2,2'-azobis(2-amidinopropane) dibasic acid salt (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), and 1,1-azobis(1-cyclohexanecarbonitrile) (VAZO 88) (all available from DuPont Chemical); and 2,2'-azobis(2-cyclopropylpropionitrile) and 2,2'-azobis(methylisobutylate) (V-601) (available from Wako Pure Chemical Industries, Ltd.).

Examples of suitable peroxide initiators include, but not limited to, benzoyl peroxide, acetyl peroxide, lauroyl peroxide, decanoyl peroxide, diacetyl peroxydicarbonate, di(4-tert-butylcyclohexyl) peroxydicarbonate (Perkadox 16S) (available from Akzo Nobel), di(2-ethylhexyl) peroxydicarbonate, tert-butyl peroxypivalate (Lupersol 11) (available from Elf Atochem), tert-butyl peroxy-2-ethylhexanoate (Trigonox 21-C50) (available from Akzo Nobel), and dicumyl peroxide.

Examples of suitable persulfate initiators include, but not limited to, potassium persulfate, sodium persulfate, and ammonium persulfate.

Examples of suitable redox (oxidation-reduction) initiators include, but not limited to, combinations of the above persulfate initiators and a reducing agent such as sodium hydrogen metasulfite or sodium hydrogen sulfite; systems based on an organic peroxide and a tertiary amine, e.g., a system based on benzoyl peroxide and dimethylaniline; systems based on organic hydroperoxide and transition metals, e.g., a system based on cumene hydroperoxide and cobalt naphthenate.

Other examples of the initiator include, but not limited to, pinacols, such as tetraphenyl-1,1,2,2-ethanediol.

A thermoradical initiator is preferably selected from the group consisting of azo initiators and peroxide initiators. Further preferred examples of the thermoradical initiator include 2,2'-azobis(methylisobutylate), tert-butyl peroxypivalate, and di(4-tert-butylcyclohexyl) peroxydicarbonate, and mixtures thereof.

In the present invention, the thermal initiator is present in a catalytically effective amount, and the amount is not particularly limited. The amount is typically about 0.01 to 5 parts by weight and more preferably about 0.025 to 2 parts by weight relative to 100 parts by weight of the total of vinyl polymer (I) of the present invention and a mixture of the monomer and oligomer added. When an initiator mixture is used, the total of the initiator mixture should be deemed as if the amount is the amount of only one initiator used.

Although the thermal curing conditions are not particularly limited, the temperature is preferably in a range of 50°C to 250°C and more preferably 70°C to 200°C depending on the thermal initiator used, polymer (I), the compound added, etc. The curing time is generally 1 minute to 10 hours depending on the polymerization initiator, monomer, solvent, and reaction temperature used, and the like.

In order to sufficiently satisfy the heat resistance and seal property required for gaskets formed on site, thermal curing is preferably performed so that the compression set under the above-mentioned conditions is preferably 30% or less and more preferably 20% or less.

<(Meth)acryloyl group-terminated (meth) acrylic polymer having excellent oil resistance and curable composition thereof>

The (meth)acryloyl polymer of the present invention is produced by atom transfer radical polymerization and has at least one group represented by formula 1 (hereinafter, sometimes abbreviated as "(meth)acryloyl group") at its molecular end:

$$-OC(O)C(R^a)=CH_2 \qquad (1)$$

(wherein $R^a$ represents hydrogen or an organic group having 1 to 20 carbon atoms), and a cured product thereof shows higher oil resistance than that of a cured product from a butyl acrylate homopolymer having the same structure in any one item of the immersion test according to JIS K 6258 for the land use 3-5 lubricating oil specified in JIS K 2215. The (meth)acryloyl polymer of the present invention can produce a cured product exhibiting excellent oil resistance.

As described above for polymer (I), the oil resistance is measured by the immersion test according to JIS K 6258 for the land use 3-5 lubricating oil specified in JIS K 2215.

As described above for polymer (I), the term "excellent oil resistance" means that the cured product shows higher oil resistance than that of a cured product from a butyl acrylate homopolymer having the same structure in any one item of the immersion test according to JIS K 6258.

In the immersion test according to JIS K 6258, the cured product preferably shows a rate of mass change of 50% or less before and after immersion. With a rate of mass change of over 50%, the cured product tends to absorb oil

to degrade the mechanical properties such as strength and the like.

The cured product more preferably shows a lower rate of volume change than that of the cured product from the butyl acrylate homopolymer having the same structure before and after immersion in the lubricating oil. This is because when the rate of volume change is higher than that of the cured product from the butyl acrylate homopolymer having the same structure, the cured product tends to swell and fail to maintain the physical properties before immersion.

The (meth) acrylic polymer having a (meth) acryloyl group at an end of the present invention is produced by the same atom transfer radical polymerization process as that for polymer (I).

As the (meth) acrylic monomer constituting the main chain of the (meth) acrylic polymer of the present invention, the same (meth)acrylic monomers as those for polymer (I) can be used, and preferred monomers are also the same as polymer (I). The main chain of the (meth) acrylic polymer of the present invention is preferably an acrylic polymer and more preferably an acrylate polymer. The main chain of the (meth)acrylic polymer of the present invention preferably has, as an essential constitutional unit, ethyl acrylate and/or alkoxyalkyl acrylate, as described above for polymer (I). In particular, the alkoxyalkyl acrylate is more preferably 2-methoxyethyl acrylate and/or 2-ethoxyethyl acrylate.

As in polymer (I), the molecular weight distribution of the (meth)acryloyl polymer of the present invention is preferably less than 1.8, further preferably 1.7 or less, more preferably 1.6 or less, particularly preferably 1.5 or less, specifically preferably 1.4 or less, and most preferably 1.3 or less.

The number-average molecular weight of the (meth)acryloyl polymer is preferably in a range of 500 to 100, 000 and more preferably 3, 000 to 40, 000. When the molecular weight is 500 or less, the inherent characteristics of the (meth) acryloyl polymer are not easily exhibited, while when the molecular weight is 100,000 or more, handling becomes difficult.

A curable composition of the present invention may contain the (meth)acrylic polymer, which is produced by atom transfer radical polymerization and which has at least one (meth)acryloyl group at a molecular end, and a photopolymerization initiator or thermopolymerization initiator. The curable composition of the present invention can produce a cured product with high oil resistance at high productivity. The photopolymerization initiator or thermopolymerization initiator and the adding amount thereof are the same as for the composition for on-site forming gaskets.

As in the composition for on-site forming gaskets, the curable composition of the present invention can contain a polymerizable monomer and/or oligomer and various additives in a range which causes no deterioration in the effect of the invention according to demand.

The curable composition of the present invention can be cured by the same process as that for the composition for on-site forming gaskets. The properties of the cured product prepared from the curable composition of the present invention depend on the main chain skeleton and molecular weight of the (meth)acrylic polymer of the present invention. A variety of cured products ranging from a rubber product to a resinous product can be produced.

Specific examples of application of the cured product prepared from the curable composition of the present invention include, but not limited to, various applications, such as sealing materials, e.g., construction elastic sealing materials and double glass sealing materials; electric and electronic part materials, e.g., solar cell back sealing materials; electric insulating materials, e.g., electric wire and cable insulating coating materials; a self-adhesive; an adhesive; an elastic adhesive; a paint; a powdered paint; a coating material; foams; electric and electronic potting agents; films; gaskets; injection materials; various molding materials; and rust-proof and waterproof sealing materials for wire glass and laminated glass ends (cut ends).

## BEST MODE FOR CARRYING OUT THE INVENTION

Although examples and comparative examples of the present invention will be described below, the present invention is not limited to these examples.

In the examples and comparative examples below, "parts" and "%" represent "parts by weight" and "% by weight", respectively.

In the examples below, the number-average molecular weight and the weight-average molecular weight (ratio of the weight-average molecular weight to the number-average molecular weight) were calculated by a standard polystyrene calibration method using gel permeation chromatography (GPC). In GPC measurement, a polystyrene-crosslinked gel column (Shodex GPC K-804; manufactured by Showa Denko K. K.) and chloroform were used as a GPC column and a mobile solvent, respectively.

In the examples below, the average number of terminal (meth)acryloyl groups means the average of numbers of (meth)acryloyl groups introduced per molecule of a polymer. The average number was determined by $^1H$ NMR analysis and the GPC number-average molecular weight.

In the present invention, the compression set of a cured product was determined by measuring a strain after 25% compression at 150°C for 70 hours, and then releasing compression to measure a rate of recovery according to JIS K 6262. Specifically, the sheet-shaped cured product prepared in each example was 25% compressed by a compression apparatus using a spacer and maintained in the compression state at 150°C for 70 hours, and then the cured

product was removed from the compression apparatus, released from the compression state, and then allowed to stand at 23°C for 30 minutes, followed by measurement of the thickness. The compression set was calculated by substituting the measured value into the following equation:

$$Cs\ (\%) = 100 \times [(t0 - t2)/(t0 - t1)]$$

In the equation, t0 represents the initial (before compression) thickness (mm) of the cured product, t1 represents the thickness (mm) of the spacer, and t2 represents the thickness (mm) of the cured product 30 minutes after removal from the compression apparatus.

With respect to the oil resistance of the cured products, each of IRM903 oil and engine oil (trade name, GEOMA, SJ grade, 5W-30: manufactured by JOMO) was used as the land use 3-5 lubricating oil specified in JIS K 2215. Each cured product was immersed in the lubricating oil at 150°C for 70 hours, and a weight change before and after immersion was measured.

(PRODUCTION EXAMPLE 1) (Synthesis of poly(n-butyl acrylate/ethyl acrylate/2-methoxyethyl acrylate) having acryloyl groups at both ends)

First, n-butyl acrylate, ethyl acrylate, and 2-methoxyethyl acrylate were polymerized at a molar ratio of 25/46/29 using cuprous bromide as a catalyst, pentamethyldiethylenetriamine as a ligand, and diethyl 2,5-dibromoadipate as an initiator to produce bromine-terminated poly(n-butyl acrylate/ethyl acrylate/2-methoxyethyl acrylate) having a number-average molecular weight of 16, 500 and a molecular weight distribution of 1.13.

Then, 400 g of the resultant polymer was dissolved in N,N-dimethylacetamide (400 mL), and 10.7 g of potassium acrylate was added to the resultant solution. The resulting mixture was heated and stirred at 70°C for 6 hours in a nitrogen atmosphere to produce a mixture of acryloyl group-terminated poly(n-butyl acrylatelethyl acrylate/2-methoxyethyl acrylate) (referred to as "polymer [1]" hereinafter). Then, N,N-dimethylacetamide was distilled off from the mixture under reduced pressure, and toluene was added to the residue. The insoluble substance was filtered off, and toluene of the filtrate was distilled off under reduced pressure to purify polymer [1]. After the purification, polymer [1] had a number-average molecular weight of 16,900, a molecular weight distribution of 1.14, and an average number of terminal acryloyl groups of 1.8.

(PRODUCTION EXAMPLE 2) (Synthesis of poly(n-butyl acrylate) having acryloyl groups at both ends)

First, n-butyl acrylate was polymerized using cuprous bromide as a catalyst, pentamethyldiethylenetriamine as a ligand, and diethyl 2,5-dibromoadipate as an initiator to produce bromine-terminated poly(n-butyl acrylate) having a number-average molecular weight of 25,200 and a molecular weight distribution of 1.20.

Then, 300 g of the resultant polymer was dissolved in N, N-dimethylacetamide (300 mL), and 5.3 g of potassium acrylate was added to the resultant solution. The resulting mixture was heated and stirred at 70°C for 3 hours in a nitrogen atmosphere to produce a mixture of acryloyl group-terminated poly (n-butyl acrylate) (referred to as "polymer [2]" hereinafter). Then, N,N-dimethylacetamide was distilled off from the mixture under reduced pressure, and toluene was added to the residue. The insoluble substance was filtered off.

Then, toluene of the filtrate was distilled off under reduced pressure to purify polymer [2]. After the purification, polymer [2] had a number-average molecular weight of 27,100, a molecular weight distribution of 1.31, and an average number of terminal acryloyl groups of 2.0.

(EXAMPLE 1)

First, 0.2 part of 2,2-diethoxyacetophenone and 1 part of Irganox 1010 (manufactured by Ciba Specialty Chemicals) were added to 100 parts of polymer [1] prepared in PRODUCTION EXAMPLE 1, and the resultant mixture was sufficiently mixed to prepare a curable composition.

Then, the resultant curable composition was irradiated with light three times using a metal halide lamp (80 W/cm, irradiation distance 15 cm, belt speed 1.0 m/min) to obtain a sheet-shaped cured product having a thickness of about 2 mm.

(EXAMPLE 2)

First, 20 parts of Aerosil R972 (manufactured by Nippon Aerosil Co., Ltd.), 0.2 part of 2,2-diethoxyacetophenone,

and 1 part of Irganox 1010 (manufactured by Ciba Specialty Chemicals) were added to 100 parts of polymer [1] prepared in PRODUCTION EXAMPLE 1, and the resultant mixture was sufficiently mixed to prepare a curable composition.

Then, the resultant curable composition was irradiated with light three times using a metal halide lamp (80 W/cm, irradiation distance 15 cm, belt speed 1.0 m/min) to obtain a sheet-shaped cured product having a thickness of about 2 mm.

(EXAMPLE 3)

First, 20 parts of Aerosil R972 (manufactured by Nippon Aerosil Co., Ltd.), 0.5 part of Perbutyl I (manufactured by NOF Corporation), and 1 part of Irganox 1010 (manufactured by Ciba Specialty Chemicals) were added to 100 parts of polymer [1] prepared in PRODUCTION EXAMPLE 1, and the resultant mixture was sufficiently mixed to prepare a curable composition.

Then, the resultant curable composition was heated with a press at 180°C for 10 minutes, and then post-cured with a dryer at 180°C for 22 hours to obtain a sheet-shaped cured product having a thickness of about 2 mm.

(EXAMPLE 4)

First, 20 parts of Alonix M215 (manufactured by Toa Synthesis Industries, Ltd.), 0.2 part of 2,2-diethoxyacetophenone, and 1 part of Irganox 1010 (manufactured by Ciba Specialty Chemicals) were added to 100 parts of polymer [1] prepared in PRODUCTION EXAMPLE 1, and the resultant mixture was sufficiently mixed to prepare a curable composition.

Then, the resultant curable composition was irradiated with light three times using a metal halide lamp (80 W/cm, irradiation distance 15 cm, belt speed 1.0 m/min) to obtain a sheet-shaped cured product having a thickness of about 2 mm.

(EXAMPLE 5)

First, 20 parts of phenoxyethyl acrylate, 0.2 part of 2,2-diethoxyacetophenone, and 1 part of Irganox 1010 (manufactured by Ciba Specialty Chemicals) were added to 100 parts of polymer [1] prepared in PRODUCTION EXAMPLE 1, and the resultant mixture was sufficiently mixed to prepare a curable composition.

Then, the resultant curable composition was irradiated with light three times using a metal halide lamp (80 W/cm, irradiation distance 15 cm, belt speed 1.0 m/min) to obtain a sheet-shaped cured product having a thickness of about 2 mm.

(EXAMPLE 6)

First, 5 parts of an acrylic monomer mixture (butyl acrylate, ethyl acrylate, and methoxyethyl acrylate at a molar ratio of 25/46/29), 0.2 part of 2,2-diethoxyacetophenone, and 1 part of Irganox 1010 (manufactured by Ciba Specialty Chemicals) were added to 100 parts of polymer [1] prepared in PRODUCTION EXAMPLE 1, and the resultant mixture was sufficiently mixed to prepare a curable composition.

Then, the resultant curable composition was irradiated with light three times using a metal halide lamp (80 W/cm, irradiation distance 15 cm, belt speed 1.0 m/min) to obtain a sheet-shaped cured product having a thickness of about 2 mm.

(EXAMPLE 7)

First, 0.5 part of Perbutyl I (manufactured by NOF Corporation) and 1 part of Irganox 1010 (manufactured by Ciba Specialty Chemicals) were added to 100 parts of polymer [1] prepared in PRODUCTION EXAMPLE 1, and the resultant mixture was sufficiently mixed to prepare a curable composition.

Then, the resultant curable composition was heated by a press at 180°C for 10 minutes, and then post-cured by a dryer at 180°C for 22 hours to obtain a sheet-shaped cured product having a thickness of about 2 mm.

(EXAMPLE 8)

First, 0.2 part of 2,2-diethoxyacetophenone and 1 part of Irganox 1010 (manufactured by Ciba Specialty Chemicals) were added to 100 parts of polymer [2] prepared in PRODUCTION EXAMPLE 2, and the resultant mixture was sufficiently mixed to prepare a curable composition.

Then, the resultant curable composition was irradiated with light three times using a metal halide lamp (80

W/cm, irradiation distance 15 cm, belt speed 1.0 m/min) to obtain a sheet-shaped cured product having a thickness of about 2 mm.

(EXAMPLE 9)

First, 0.5 part of Perbutyl I (manufactured by NOF Corporation) and 1 part of Irganox 1010 (manufactured by Ciba Specialty Chemicals) were added to 100 parts of polymer [2] prepared in PRODUCTION EXAMPLE 2, and the resultant mixture was sufficiently mixed to prepare a curable composition.

Then, the resultant curable composition was heated by a press at 180°C for 10 minutes, and then post-cured by a dryer at 180°C for 22 hours to obtain a sheet-shaped cured product having a thickness of about 2 mm.

(COMPARATIVE EXAMPLE 1)

First, 100 g of alkenyl-terminated polyoxypropylene glycol having a molecular weight of about 10, 000, 6. 9 g of linear siloxane having five hydrosilyl groups and five $\alpha$-methylstyrene originated groups on average per molecule, and 0.64 ml of 1,1,3,3-tetramethyl-1,3-divinyldisiloxane complex of zero-valent platinum were mixed at room temperature, followed by curing at 150°C for 10 minutes.

The curable compositions prepared in EXAMPLES 1 to 9 are briefly summarized in Table 1.

Table 1

| | Amount of polymer added (parts) | Amount of Irganox 1010 added (parts) | Aerosil R972 (parts) | Name and amount of initiator added (parts) | Name and amount of additive | Curing method |
|---|---|---|---|---|---|---|
| Example 1 | Polymer [1] 100 parts | 1 | 0 | DEAP[1)] 0.2 part | No | Light |
| Example 2 | Polymer [1] 100 parts | 1 | 20 | DEAP 0.2 part | No | Light |
| Example 3 | Polymer [1] 100 parts | 1 | 20 | Perbutyl I 0.5 part | No | Heat |
| Example 4 | Polymer (1) 100 parts | 1 | 0 | DEAP 0.2 part | Alonix M215 20 parts | Light |
| Example 5 | Polymer [1] 100 parts | 1 | 0 | DEAP 0.2 part | Phenoxyethyl acrylate 20 parts | Light |
| Example 6 | Polymer [1] 100 parts | 1 | 0 | DEAP 0.2 part | Acrylic monomer mixture 5 parts | Light |
| Example 7 | Polymer [1] 100 parts | 1 | 0 | Perbutyl I 0.5 part | No | Heat |
| Example 8 | Polymer [2] 100 parts | 1 | 0 | DEAP 0.2 part | No | Light |
| Example 9 | Polymer [2] 100 parts | 1 | 0 | Perbutyl I 0.5 part | No | Heat |
| 1) DEAP: 2,2-diethoxyacetophenone | | | | | | |

Table 2 shows the results of the hardness and oil resistance (increase in weight with IRM903 oil at 150°C for 70 hours) of the cured product prepared in each of EXAMPLES 1 to 9 and COMPARATIVE EXAMPLE 1.

Table 2

| | Hardness (Duro A) | Oil resistance (increase in mass: %) |
|---|---|---|
| Cured product of Example 1 | 20 | 15 |
| Cured product of Example 2 | 44 | 12 |
| Cured product of Example 3 | 32 | 14 |
| Cured product of Example 4 | 61 | 15 |
| Cured product of Example 5 | 17 | 17 |
| Cured product of Example 6 | 19 | 12 |
| Cured product of Example 7 | 7 | 19 |
| Cured product of Example 8 | 7 | 120 |
| Cured product of Example 9 | 0 | 180 |
| Cured product of Comparative Example 1 | 24 | 362 |

Table 3 shows the results of the oil resistance (increase in weight with engine oil, trade name GEOMA SJ grade, 5W-30, manufactured by JOMO, at 150°C for 70 hours) of the cured product prepared in each of the examples.

Table 3

| | Oil resistance (increase in mass: %) |
|---|---|
| Cured product of Example 1 | 6 |
| Cured product of Example 7 | 6 |
| Cured product of Example 8 | 26 |
| Cured product of Example 9 | 28 |

Table 4 shows the mechanical physical properties after curing of the cured product prepared in each of EXAMPLES 1 to 9 and COMPARATIVE EXAMPLE 1.

Table 4

| | M50 (MPa) | M100 (MPa) | Tb (MPa) | Eb (%) |
|---|---|---|---|---|
| Cured product of Example 1 | 0.39 | - | 0.46 | 60 |
| Cured product of Example 2 | 0.69 | 1.29 | 1.84 | 130 |
| Cured product of Example 3 | 0.38 | 0.82 | 6.75 | 450 |
| Cured product of Example 4 | 2.05 | - | 2.37 | 60 |
| Cured product of Example 5 | 0.28 | - | 0.47 | 90 |
| Cured product of Example 6 | 0.28 | - | 0.37 | 70 |
| Cured product of Example 7 | 0.15 | 0.26 | 0.54 | 220 |
| Cured product of Example 8 | 0.14 | 0.25 | 0.31 | 130 |
| Cured product of Example 9 | 0.10 | 0.18 | 0.45 | 270 |
| Cured product of Comparative Example 1 | 0.37 | 0.56 | 0.57 | 100 |

Table 5 shows the compression set (25% compression at 150°C for 70 hours) after curing of the cured product prepared in each of EXAMPLES 1 to 9 and COMPARATIVE EXAMPLE 1.

Table 5

| | Compression set (%) |
|---|---|
| Cured product of Example 1 | 5 |
| Cured product of Example 2 | 15 |
| Cured product of Example 3 | 27 |
| Cured product of Example 4 | 7 |
| Cured product of Example 5 | 14 |
| Cured product of Example 6 | 11 |
| Cured product of Example 7 | 10 |
| Cured product of Example 8 | 4 |
| Cured product of Example 9 | 15 |

INDUSTRIAL APPLICABILITY

The present invention can provide a composition for on-site forming gaskets, which produces a cured product with low compression set. The composition for on-site forming gaskets of the present invention can produce gaskets formed on site with excellent heat resistance, weather resistance, oil resistance, curability, or the like.

Also, the present invention can provide a (meth)acryloyl group-terminated (meth)acrylic polymer having excellent oil resistance while maintaining physical properties such as high heat resistance and flexibility, and a curding composition thereof.

**Claims**

1. A composition for on-site forming gaskets which comprises 10% to 100% by weight of a vinyl polymer [polymer (I)] having at least one group represented by formula (1) per molecule at its molecular end:

$$-OC(O)C(R^a)=CH_2 \qquad (1)$$

(wherein $R^a$ represents hydrogen or an organic group having 1 to 20 carbon atoms), a cured product prepared by curing the composition having a compression set of 40% or less according to the definition of JIS K 6262.

2. The composition according to claim 1, wherein $R^a$ is hydrogen or a hydrocarbon group having 1 to 20 carbon atoms.

3. The composition according to claim 2, wherein $R^a$ is hydrogen or a methyl group.

4. The composition according to any one of claims 1 to 3, wherein the composition is used for sealing a portion required to have oil resistance.

**5.** The composition according to any one of claims 1 to 4, wherein the composition is used for sealing a portion required to have oil resistance and heat resistance.

**6.** The composition according to any one of claims 1 to 5, wherein the composition is used in the periphery of an automobile engine.

**7.** The composition according to any one of claims 1 to 6, wherein the composition is used for sealing an oil-pan bonding surface of an automobile.

**8.** The composition according to any one of claims 1 to 7 comprising 10% to 100% by weight of polymer (I), wherein a cured product of the composition showing higher oil resistance than that of a cured product from a composition containing a polymer which is prepared by substituting the repeat unit of the main chain of polymer (I) with butyl acrylate alone, in any one item of the immersion test according to JIS K 6258 for the land use 3-5 lubricating oil specified in JIS K 2215.

**9.** The composition according to any one of claims 1 to 7 comprising 10% to 100% by weight of polymer (I), wherein a cured product of the composition showing a rate of mass change of 50% or less before and after immersion in the immersion test according to JIS K 6258 for the land use 3-5 lubricating oil specified in JIS K 2215.

**10.** The composition according to claim 8 or 9, wherein a cured product of the composition shows a smaller change of mass than that of a cured product from a composition containing a polymer which is prepared by substituting the repeat unit of the main chain of polymer (I) with butyl acrylate alone in the immersion test according to JIS K 6258 for the land use 3-5 lubricating oil specified in JIS K 2215.

**11.** The composition according to any one of claims 8 to 10, wherein a cured product of the composition shows a smaller change of volume than that of a cured product from a composition containing a polymer which is prepared by substituting the repeat unit of the main chain of polymer (I) with butyl acrylate alone in the immersion test according to JIS K 6258 for the land use 3-5 lubricating oil specified in JIS K 2215.

**12.** The composition according to any one of claims 1 to 11, wherein polymer (I) is a (meth)acrylic polymer.

**13.** The composition according to any one of claims 1 to 12, wherein polymer (I) is an acrylic polymer.

**14.** The composition according to any one of claims 1 to 13, wherein polymer (I) is an acrylate polymer.

**15.** The composition according to any one of claims 1 to 14, wherein polymer (I) comprises ethyl acrylate and/or an alkoxyalkyl acrylate as an essential constitutional unit.

**16.** The composition according to claim 15, wherein the alkoxyalkyl acrylate is 2-methoxyethyl acrylate and/or 2-ethoxyethyl acrylate.

**17.** The composition according to any one of claims 1 to 11, wherein polymer (I) is a styrene polymer.

**18.** The composition according to any one of claims 1 to 17, wherein polymer (I) is produced by the step of:

reacting a halogen group-terminated vinyl polymer with a compound represented by formula (2):

$$M^{+-}OC(O)C(R^a)=CH_2 \qquad (2)$$

(wherein $R^a$ represents hydrogen or an organic group having 1 to 20 carbon atoms, and $M^+$ represents an alkali metal ion or a quaternary ammonium ion).

**19.** The composition according to claim 18, wherein the halogen group-terminated vinyl polymer is represented by formula (3):

$$-CR^1R^2X \qquad (3)$$

(wherein $R^1$ and $R^2$ each represent a group bonded to an ethylenically unsaturated group of a vinyl monomer, and

X represents chlorine, bromine, or iodine).

**20.** The composition according any one of claims 1 to 17, wherein polymer (I) is produced by the step of:

reacting a hydroxyl group-terminated vinyl polymer with a compound represented by formula (4):

$$X^1C(O)C(R^a)=CH_2 \qquad (4)$$

(wherein $R^a$ represents hydrogen or an organic group having 1 to 20 carbon atoms, and $X^1$ represents chlorine, bromine, or a hydroxyl group).

**21.** The composition according any one of claims 1 to 17, wherein polymer (I) is produced by the step of:

(1) reacting a hydroxyl group-terminated vinyl polymer with a diisocyanate compound and then (2) reacting the residual isocyanate group with a compound represented by formula 5:

$$HO\text{-}R'\text{-}OC(O)C(R^a)=CH_2 \qquad (5)$$

(wherein $R^a$ represents hydrogen or an organic group having 1 to 20 carbon atoms, and R' represents a divalent organic group having 2 to 20 carbon atoms).

**22.** The composition according to any one of claims 1 to 21, wherein the main chain of polymer (I) is produced by living radical polymerization of a vinyl monomer.

**23.** The composition according to any one of claims 1 to 21, wherein the main chain of polymer (I) is produced by polymerization of a vinyl monomer using a chain transfer agent.

**24.** The composition according to claim 22, wherein the living radical polymerization is atom transfer radical polymerization.

**25.** The composition according to claim 24, wherein the main chain of polymer is produced by the atom transfer radical polymerization of a (meth)acrylic monomer using an organic halide or halogenated sulfonyl compound as an initiator, and a metal complex as a catalyst, the metal complex having a VIII, TX, X, or XI group element in the periodic table as a central metal.

**26.** The composition according to claim 25, wherein the transition metal complex used as the catalyst of the atom transfer radical polymerization is selected from complexes of copper, nickel, ruthenium, and iron.

**27.** The composition according to claim 26, wherein the transition metal complex is a copper complex.

**28.** The composition according to any one of claims 1 to 27, wherein polymer (I) has a number-average molecular weight of 3,000 or more.

**29.** The composition according to any one of claims 1 to 28, wherein polymer (I) has a ratio of the weight-average molecular weight to the number-average molecular weight determined by gel permeation chromatography of less than 1.8.

**30.** The composition according to any one of claims 1 to 29, which further comprises a monomer and/or oligomer having a radical polymerizable group.

**31.** The composition according to any one of claims 1 to 29, which further comprises a monomer and/or oligomer having an anionic polymerizable group.

**32.** The composition according to claim 30 or 31, which comprises a monomer and/or oligomer having a (meth)acryloyl group.

**33.** The composition according to claim 32, which comprises a monomer and/or oligomer having a (meth)acryloyl group and a number-average molecular weight of 5,000 or less.

**34.** The composition according to any one of claims 1 to 33, which further comprises a photopolymerization initiator.

**35.** The composition according to claim 34, wherein the photopolymerization initiator is a photoradical initiator.

**36.** The composition according to claim 34, wherein the photopolymerization initiator is a photoanion initiator.

**37.** The composition according to any one of claims 1 to 33, which further comprises a thermopolymerization initiator.

**38.** The composition according to claim 37, wherein the thermopolymerization initiator is selected from the group consisting of azo initiators, peroxides, persulfates, and redox initiators.

**39.** A gasket formed on site which is prepared from the composition according to any one of claims 1 to 38.

**40.** An on-site formed gasket which is produced by irradiating the composition according to any one of claims 34 to 36 with active energy rays.

**41.** The gasket according to claim 40, wherein the compression set according to JIS K 6262 is 30% or less.

**42.** The gasket according to claim 40, wherein the compression set according to JIS K 6262 is 20% or less.

**43.** The gasket according to claim 40, wherein the compression set according to JIS K 6262 is 15% or less.

**44.** An on-site formed gasket produced by thermally curing the composition according to claim 37 or 38.

**45.** The gasket according to claim 44, wherein the compression set according to JIS K 6262 is 30% or less.

**46.** The gasket according to claim 44, wherein the compression set according to JIS K 6262 is 20% or less.

**47.** A method for preparing a curable composition which comprises mixing 10% to 100% by weight of a vinyl polymer [polymer (I)] having at least one group represented by formula (1) per molecule at its molecular end:

$$-OC(O)C(R^a)=CH_2 \qquad (1)$$

(wherein $R^a$ represents hydrogen or an organic group having 1 to 20 carbon atoms), a cured product produced by curing the composition having a compression set of 40% or less according to JIS K 6262.

**48.** The method according to claim 47, wherein the curable composition is a composition for on-site forming gaskets.

**49.** A (meth)acrylic polymer produced by atom transfer radical polymerization, which has at least one group represented by formula (1) at its molecular end:

$$-OC(O)C(R^a)=CH_2 \qquad (1)$$

(wherein $R^a$ represents hydrogen or an organic group having 1 to 20 carbon atoms), a cured product prepared from the polymer showing higher oil resistance than that of a cured product from a composition containing a butyl acrylate homopolymer having the same structure in any one item of the immersion test according to JIS K 6258 for the land use 3-5 lubricating oil specified in JIS K 2215.

**50.** A (meth)acrylic polymer produced by atom transfer radical polymerization, which has at least one group represented by formula (1) at its molecular end:

$$-OC(O)C(R^a)=CH_2 \qquad (1)$$

(wherein $R^a$ represents hydrogen or an organic group having 1 to 20 carbon atoms), a cured product prepared from the polymer showing a rate of mass change of 50% or less before and after immersion in the immersion test according to JIS K 6258 for the land use 3-5 lubricating oil specified in JIS K 2215.

**51.** The (meth) acrylic polymer according to claim 50, wherein a cured product of the polymer shows a smaller change

of mass than that of a cured product from a butyl acrylate homopolymer having the same structure before and after immersion in the lubricating oil according to claim 49 or 50.

**52.** The (meth) acrylic polymer according to any one of claims 49 to 51, wherein a cured product of the polymer shows a smaller change of volume than that of a cured product from a butyl acrylate homopolymer having the same structure before and after immersion in the lubricating oil according to claim 49 or 50.

**53.** The (meth) acrylic polymer according to any one of claims 49 to 52, wherein the molecular weight distribution is less than 1.8.

**54.** The (meth) acrylic polymer according to any one of claims 49 to 53, wherein the main chain is an acrylic polymer.

**55.** The (meth) acrylic polymer according to claim 54, wherein the main chain is an acrylate polymer.

**56.** The (meth) acrylic polymer according to claim 54, wherein the acrylic polymer comprises ethyl acrylate and/or an alkoxyalkyl acrylate as an essential constitutional unit.

**57.** The (meth) acrylic polymer according to claim 56, wherein the alkoxyalkyl acrylate is 2-methoxyethyl acrylate and/or 2-ethoxyethyl acrylate.

**58.** The (meth) acrylic polymer according to any one of claims 49 to 57, which is produced by reacting a halogen group-terminated (meth)acrylic polymer with a compound represented by formula (2):

$$M^{+-}OC(O)C(R^a)=CH_2 \qquad (2)$$

(wherein $R^a$ represents hydrogen or an organic group having 1 to 20 carbon atoms, and $M^+$ represents an alkali metal ion or a quaternary ammonium ion).

**59.** The (meth) acrylic polymer according to claim 58, wherein the halogen group-terminated (meth)acrylic polymer is represented by formula (3):

$$-CR^1R^2X \qquad (3)$$

(wherein $R^1$ and $R^2$ each represent a group bonded to an ethylenically unsaturated group of a vinyl monomer, and X represents chlorine, bromine, or iodine).

**60.** The (meth)acrylic polymer according any one of claims 49 to 57, which is produced by reacting a hydroxyl group-terminated (meth)acrylic polymer with a compound represented by formula (4):

$$X^1C(O)C(R^a)=CH_2 \qquad (4)$$

(wherein $R^a$ represents hydrogen or an organic group having 1 to 20 carbon atoms, and $X^1$ represents chlorine, bromine, or a hydroxyl group).

**61.** The (meth)acrylic polymer according any one of claims 49 to 57, which is produced by (1) reacting a hydroxyl group-terminated (meth)acrylic polymer with a diisocyanate compound, and (2) reacting the residual isocyanate group with a compound represented by formula (5):

$$HO-R'-OC(O)C(R^a)=CH_2 \qquad (5)$$

(wherein $R^a$ represents hydrogen or an organic group having 1 to 20 carbon atoms, and R' represents a divalent organic group having 2 to 20 carbon atoms).

**62.** The (meth) acrylic polymer according to any one of claims 49 to 61, wherein the main chain is produced by the atom transfer radical polymerization of a (meth)acrylic monomer using an organic halide or halogenated sulfonyl compound as an initiator, and a metal complex as a catalyst, the metal complex having a VIII, IX, X, or XI group element in the periodic table as a central metal.

**63.** A curable composition which comprises, as essential components, (A) the (meth) acrylic polymer according to any one of claims 49 to 62 which is produced by atom transfer radical polymerization and has at least one group represented by formula (1) at its molecular end:

$$-OC(O)C(R^a)=CH_2 \qquad (1)$$

(wherein $R^a$ represents hydrogen or an organic group having 1 to 20 carbon atoms), and (B) a photopolymerization initiator.

**64.** A curable composition which comprises, as essential components, (A) the (meth) acrylic polymer according to any one of claims 49 to 62 which is produced by atom transfer radical polymerization and has at least one group represented by formula (1) at its molecular end:

$$-OC(O)C(R^a)=CH_2 \qquad (1)$$

(wherein $R^a$ represents hydrogen or an organic group having 1 to 20 carbon atoms), and (B) a thermopolymerization initiator.

**65.** A composition for on-site forming gaskets which comprises the acrylic polymer according to any one of claims 49 to 62.

**66.** A molded product which is prepared from a curable composition containing the acrylic polymer according to any one of claims 49 to 62.

**67.** A curable composition which comprises a (meth)acrylic polymer produced by atom transfer radical polymerization and having ethyl acrylate and/or an alkoxyalkyl acrylate as an essential constitutional unit and at least one group represented by formula (1) at its molecular end:

$$-OC(O)C(R^2)=CH_2 \qquad (1)$$

(wherein $R^a$ represents hydrogen or an organic group having 1 to 20 carbon atoms).

**68.** The curable composition according to claim 67, wherein the alkoxyalkyl acrylate is 2-methoxyethyl acrylate and/or 2-ethoxyethyl acrylate.

**69.** The curable composition according to claim 67 or 68, which is used as a composition for on-site forming gaskets.

**INTERNATIONAL SEARCH REPORT**

International application No.
PCT/JP2004/014139

A. CLASSIFICATION OF SUBJECT MATTER
Int.Cl$^7$ C08L3/00, C08F20/18, C09K3/10, F16J15/10, 15/14

According to International Patent Classification (IPC) or to both national classification and IPC

B. FIELDS SEARCHED

Minimum documentation searched (classification system followed by classification symbols)
Int.Cl$^7$ C08L1/00-101/14, C08F20/00-20/40

Documentation searched other than minimum documentation to the extent that such documents are included in the fields searched

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X | JP 2000-119350 A (Kaneka Corp.), 25 April, 2000 (25.04.00), Claims; Par. Nos. [0019] to [0141] (Family: none) | 1-5,8-29,34, 39,47-62, 65-69 |
| X | JP 2000-186112 A (Kaneka Corp.), 04 July, 2000 (04.07.00), Claims; Par. Nos. [0012] to [0199] & WO 2000/020468 A1 & EP 1179545 A1 | 1-5,8-69 |
| X | JP 2000-072816 A (Kaneka Corp.), 07 March, 2000 (07.03.00), Claims; Par. Nos. [0017] to [0081] & WO 1999/043719 A1 & EP 1059308 A1 | 1-69 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 December, 2004 (08.12.04) | 28 December, 2004 (28.12.04) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/014139

C (Continuation). DOCUMENTS CONSIDERED TO BE RELEVANT

| Category* | Citation of document, with indication, where appropriate, of the relevant passages | Relevant to claim No. |
|---|---|---|
| X | WO 1999/065963 A1 (Kaneka Corp.), 23 December, 1999 (23.12.99), Claims; detail explanation of the invention & EP 1160266 A1 | 1-29,34-69 |

Form PCT/ISA/210 (continuation of second sheet) (January 2004)